# EUROPÄISCHE PATENTSCHRIFT

(11) **EP 3 525 995 B1**
(45) Veröffentlichungstag und Bekanntmachung des Hinweises auf die Patenterteilung: **11.11.2020**
(21) Anmeldenummer: 17783833.1
(22) Anmeldetag: 11.10.2017
(51) Int. Cl.: B26D 1/03, B26D 11/00, B29C 49/42, B26D 3/00, B65H 35/02, B26D 5/34, B26D 5/32, B26D 5/04, B23K 26/38, B23K 26/08, B26F 3/00, B29C 48/00, B29C 48/10, B29C 48/92, B65H 35/00

(54) **TRENNVORRICHTUNG FÜR DAS AUFTRENNEN EINES SCHLAUCHFÖRMIGEN FLACHMATERIALS, SYSTEM SOWIE TRENNVERFAHREN**
SEPARATING DEVICE FOR SEPARATING A TUBULAR FLAT MATERIAL, SYSTEM, AND SEPARATING METHOD
DISPOSITIF DE COUPE DESTINÉ AU SECTIONNEMENT D'UN MATÉRIAU PLAT EN FORME DE TUYAU SOUPLE, SYSTÈME ET PROCÉDÉ DE COUPE

(30) Priorität: 11.10.2016 DE 102016119281
(43) Veröffentlichungstag der Anmeldung: 21.08.2019
(73) Patentinhaber: Windmöller & Hölscher KG, 49525 Lengerich (DE)
(72) Erfinder: SUNDERMANN, Fabian, 49525 Lengerich (DE); SEHLLEIER, Thomas, 49525 Lengerich (DE)
(86) Internationale Anmeldenummer: PCT/EP2017/075959
(87) Internationale Veröffentlichungsnummer: WO 2018/069402

(56) Entgegenhaltungen:
- EP-A1- 2 253 437
- GB-A- 744 977
- KR-B1- 101 628 326

## Beschreibung

Die vorliegende Erfindung betrifft eine Trennvorrichtung für das Auftrennen eines schlauchförmigen Flachmaterials gemäß dem Oberbegriff des Anspruches 1, ein System sowie ein Trennverfahren zum Auftrennen eines schlauchförmigen Flachmaterials. Eine derartige Trennvorrichtung ist beispielsweise bekannt aus der Patentschrift GB 744 977 A.

Bei der Produktion von Bahnen aus Flachmaterial werden diese häufig zunächst schlauchförmig erzeugt und anschließend der Schlauch aufgeschnitten um zumindest zwei Flachbahnen zu erhalten, welche getrennt voneinander aufgewickelt werden können. Ein Beispiel für ein solches Herstellverfahren ist eine Folienextrusion, insbesondere eine Blasfolienextrusion. Dabei wird die Folie zunächst in zumindest teilweise flüssigem Zustand aus einem Blaskopf kreisförmig ausgegeben und nach einer Abkühlphase in einem Abkühlbereich einem Vorschub zugeführt, welcher eine Transportbewegung der Folie unterstützt. Um den Folienschlauch aufzuschneiden, sodass mindestens zwei Flachbahnen entstehen, welche getrennt auf Wickelvorrichtungen gewickelt werden, sind unterschiedliche Systeme bekannt.

So ist es beispielsweise bekannt, die Folie an den Seiten aufzuschlitzen, wobei der Schnitt in einer Ebene zwischen den entstehenden Flachbahnen erfolgt. Ferner ist es bekannt, den Folienschlauch zusammenzulegen und die Randbereiche seitlich abzutrennen. Dabei entstehen die Randstreifen als geringfügiger Verschnitt, sodass gewährleistet ist, dass die Flachbahnen stets eine konstante Breite aufweisen und auch die Kanten der Flachbahnen durch das Aufschneiden von oben definiert ausgebildet sind. Somit ergibt sich eine deutliche Qualitätssteigerung der Flachbahnen.

Problematisch kann dabei jedoch sein, wenn das schlauchförmige Flachmaterial eine starke Durchmesserschwankung im Laufe des Verfahrens aufweist. Dies kann beispielsweise beim Blasfolienextrusionsverfahren vorkommen, wenn die Blase des Blasfolienextrusionsverfahrens, welche hinter dem Blaskopf entsteht, aufgrund äußerer Umstände oder schwankender Verfahrensparameter etwas einfällt, sodass ein kurzer Bereich des Schlauches entsteht, welcher nicht breit genug ist, um einen abgeschnittenen Randstreifen unter normalen Betriebsbedingungen zu gewährleisten. Dies kann dazu führen, dass das schlauchförmige Material in dem Bereich der Durchmesserschwankung nicht aufgeschnitten wird und sich somit auch nicht auf die Wickelvorrichtungen aufteilen kann, wie für die Flachbahnen vorgesehen. In insbesondere zufälliger Abhängigkeit von Umgebungsbedingungen und Prozessparametern kann somit der Schlauch lediglich zu einer Wickelvorrichtung geführt werden, während jedoch aufgrund der vorangehenden Flachbahn auch die zweite Wickelvorrichtung noch mit dem nicht aufgeschnittenen Abschnitt des Schlauches zusammenhängt. Somit kann eine Konfusion der Flachbahnen und des Schlauchstückes die Folge sein, sodass der Prozess der Herstellung des Flachmaterials gestört ist. Ein Maschinenbediener muss daraufhin reagieren und die Flachbahn oder das Schlauchstück durchtrennen und daraufhin die gesamte Extrusionsmaschine erneut einstellen. Während dieser Zeit wird jedoch lediglich nicht verwendbares Folienmaterial produziert, da dieses nicht auf die Wickelvorrichtungen aufgewickelt werden kann. Weiterhin bewegt sich der Bediener innerhalb der Maschine, um manuell den Reset der Vorrichtung vorzunehmen.

Es ist daher Aufgabe der vorliegenden Erfindung, voranstehende aus dem Stand der Technik bekannte Nachteile zumindest teilweise zu beheben. Insbesondere ist es die Aufgabe der vorliegenden Erfindung einen Produktionsprozess von Flachbahnen aus einem schlauchförmigen Flachmaterial in seiner Prozesssicherheit in einfacher und kostengünstiger Art und Weise zu verbessern.

Die voranstehende Aufgabe wird gelöst durch eine Trennvorrichtung mit den Merkmalen des Anspruches 1, ein System mit den Merkmalen des Anspruches 20 sowie ein Trennverfahren mit den Merkmalen des Anspruches 21.

Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Trennvorrichtung beschrieben worden sind, selbstverständlich auch im Zusammenhang mit dem erfindungsgemäßen System und/oder dem erfindungsgemäßen Trennverfahren und jeweils umgekehrt, sodass bzgl. der Offenbarung zu den einzelnen Erfindungsaspekten stets wechselseitig Bezug genommen wird bzw. werden kann.

Erfindungsgemäß weist die Trennvorrichtung für das Auftrennen eines schlauchförmigen, eine Ist-Schlauchbreite aufweisenden Flachmaterials zumindest eine Längstrenneinheit zum Auftrennen oder Abtrennen eines ersten Randbereiches und eines zweiten Randbereiches des Flachmaterials auf. Ferner ist eine Hilfstrenneinheit vorgesehen, welche von einem Hilfsruhezustand in einen Hilfstrennzustand bringbar ist, vorzugsweise wenn die Ist-Schlauchbreite kleiner ist als eine Soll-Schlauchbreite. Dabei ist die Hilfstrenneinheit im Hilfsruhezustand deaktiviert und im Hilfstrennzustand aktiviert, sodass im Hilfstrennzustand ein erster und/oder ein zweiter Hilfsrandbereich von einem Mittelbereich des Flachmaterials abtrennbar ist.

Das Flachmaterial kann insbesondere ein Folienmaterial sein, besonders bevorzugt ein Kunststofffolienmaterial. Wie einleitend beschrieben, kann sich insbesondere bei der Blasfolienextrusion die Ist-Schlauchbreite des Flachmaterials deutlich reduzieren, sodass die Trennvorrichtung dabei eine Prozesssicherheit des Produktionsprozesses verbessern kann. Unter der Ist-Schlauchbreite kann im Sinne der vorliegenden Erfindung eine Breite des schlauchförmigen Flachmaterials verstanden werden, über welche sich das schlauchförmige Flachmaterial ausbreitet. Die Ist-Schlauchbreite kann beispielsweise je nach Zusammendrücken des Schlauches bei konstantem Grunddurchmesser des Schlauches variieren. So kann die Ist-Schlauchbreite vorzugsweise eine Ausbreitungsbreite des Flachmaterials im Bereich der Trennvorrichtung sein. Der erste und zweite Randbereich können ferner eine Faltung des Flachmaterials aufweisen. Somit kann durch Auftrennen der Faltung im jeweiligen Randbereich durch die Längstrenneinheit realisiert sein, dass zwei Flachbahnen entstehen. So kann der Schlauch insbesondere parallel zu den Flachbahnen in der Faltung aufgetrennt werden. Bevorzugt können durch Abtrennen der Randbereiche von dem schlauchförmigen Flachmaterial zwei Flachbahnen entstehen, da der Schlauch zwischen den Randbereichen nicht mehr oder nur noch teilweise zusammenhängt. Somit kann auch durch Abtrennen der Randbereiche das schlauchförmige Flachmaterial aufgetrennt werden. So ist unter einem Auftrennen oder Abtrennen der Randbereiche insbesondere ein kontinuierliches Auftrennen oder Abtrennen der Randbereiche zu verstehen, sodass beispielsweise beim Abtrennen lediglich eine Trennung der Randbereiche vom Mittelbereich des Flachmaterials erfolgt, während der Schlauch mit den Randbereichen vor dem Passieren der Längstrenneinheit weiterhin zusammenhängt. Der Mittelbereich kann im Sinne der vorliegenden Erfindung vorzugsweise ein Bereich sein, welcher dazu geeignet ist, nach dem Auftrennen des schlauchförmigen Flachmaterials zwei Flachbahnen auszubilden. Dazu kann der Mittelbereich quer zu einer Transportrichtung des Flachmaterials insbesondere breiter als 20mm, bevorzugt breiter als 50 mm, besonders bevorzugt breiter als 100mm sein, damit die Flachbahnen beim Auftrennen des Flachmaterials durch die Hilfstrenneinheit noch zuverlässig auf Wickelvorrichtungen aufwickelbar sind. Insbesondere ist der Mittelbereich ein Bereich des Flachmaterials, welcher zwischen den Randbereichen und/oder den Hilfsrandbereichen angeordnet ist. Somit kann der Mittelbereich variieren, insbesondere abhängig davon, ob durch die Hilfstrenneinheit oder die Längstrenneinheit ein Auftrennen oder Abtrennen der Randbereiche bzw. Abtrennen der Hilfsrandbereiche erfolgt. Unter dem Abtrennen der Randbereiche kann somit ein zumindest teilweises Trennen der Randbereiche vom Schlauch verstanden werden. Das Abtrennen kann somit dazu führen, dass die Randbereiche zumindest abschnittsweise vom Mittelbereich entfernbar sind. Dabei können die Längs- und/oder die Hilfstrenneinheit dazu ausgebildet sein, das Abtrennen der Randbereiche bzw. des Hilfsrandbereiches oder der Hilfsrandbereiche mechanisch, chemisch oder thermisch zu gewährleisten. Die Abtrennung des Hilfsrandbereiches oder der Hilfsrandbereiche erfolgt dabei vorzugsweise näher zum Mittelbereich des Flachmaterials, als die Abtrennung der Randbereiche. Somit weist die Trennvorrichtung die Hilfstrenneinheit auf, so dass der der erste Hilfsrandbereich vorzugsweise den Bereich des ersten Randbereiches umfassen kann und/oder der zweite Hilfsrandbereich vorzugsweise den Bereich des zweiten Randbereiches. Die Hilfstrenneinheit ist im Hilfsruhezustand dabei deaktiviert. Unter der Deaktivierung der Hilfstrenneinheit kann verstanden werden, dass die Hilfstrenneinheit im Hilfsruhezustand ein Abtrennen der Hilfsrandbereiche oder des Hilfsrandbereiches nicht ermöglicht, während die Hilfstrenneinheit im Hilfstrennzustand ein Abtrennen der Hilfsrandbereiche zumindest abschnittsweise gewährleisten kann. Vorzugweise erfolgt das Überführen vom Hilfsruhezustand in den Hilfstrennzustand in einer Wirkrichtung, die zumindest im Wesentlichen senkrecht zur Oberfläche des Flachmaterials ist. Insbesondere ist die Hilfstrenneinheit auch umgekehrt vom Hilfstrennzustand in den Hilfsruhezustand überführbar, beispielsweise wenn die Ist-Schlauchbreite größer oder gleich der Soll-Schlauchbreite ist. Unter der Soll-Schlauchbreite kann eine Breite verstanden werden, welche ausreicht, um ein Auftrennen oder Abtrennen des ersten und zweiten Randbereiches zu gewährleisten, insbesondere ohne die Längstrenneinheit zu verstellen. Somit kann die Soll-Schlauchbreite beispielsweise aus einem Abstand von Längstrennmitteln der Längstrenneinheit resultieren, insbesondere gleich einem Wirkabstand der Längstrennmittel sein. Insbesondere können die Hilfstrenneinheit und die Längstrenneinheit gemeinsam ansteuerbar sein.

Vorzugsweise kann bei einer erfindungsgemäßen Trennvorrichtung vorgesehen sein, dass die Hilfstrenneinheit vom Hilfsruhezustand in den Hilfstrennzustand bringbar ist, wenn die Ist-Schlauchbreite kleiner ist als eine Soll-Schlauchbreite. Dies wurde bereits voranstehend erläutert. Zusätzlich oder alternativ kann die Hilfstrenneinheit vom Hilfsruhezustand in den Hilfstrennzustand bringbar sein, wenn das Auftrennen der Randbereiche unterbrochen ist. So kann insbesondere eine Positionierung der Längstrenneinheit, vorzugsweise von Längstrennmitteln der Längstrenneinheit, überwacht werden, um festzustellen, ob diese noch das Flachmaterial trennen. Beispielsweise können die Längstrennmittel federbelastet sein und unter bestimmten Prozessbedingungen, insbesondere wenn die Ist-Schlauchbreite kleiner ist, als eine Soll-Schlauchbreite, einen Eingriff mit dem Flachmaterial verlieren. Besonders bevorzugt kann die Hilfstrenneinheit vom Hilfsruhezustand in den Hilfstrennzustand bringbar sein, wenn das Auftrennen der Randbereiche unterbrochen ist, wenn die Längstrenneinheit zum Auftrennen der Randbereiche ausgebildet ist und beispielsweise die Längstrennmittel Seitenschlitzmesser aufweisen.

Somit ergibt sich bei einer erfindungsgemäßen Trennvorrichtung der Vorteil, dass die Wahrscheinlichkeit einer Konfusion von der Trennvorrichtung nachgeordneten Wickelvorrichtungen für das Flachmaterial reduziert ist. Durch die Hilfstrenneinheit kann ein Zertrennen des Schlauchförmigen Flachmaterials auch dann gewährleistet werden, wenn eine Soll-Schlauchbreite nicht erreicht wird und die Ist-Schlauchbreite somit kleiner ist als die Soll-Schlauchbreite. Somit sind ferner Möglichkeiten gegeben, das Verfahren zu automatisieren und dadurch die Tätigkeit eines Benutzers zu reduzieren. Daher kann durch einfache Maßnahmen eine Prozesssicherheit beim Auftrennen des schlauchförmigen Flachmaterials in Flachbahnen gewonnen werden. Insbesondere kann es, beispielsweise im Falle eines Fehlers beim Auf- bzw. Abtrennen der Randbereiche, ausreichend sein, einen Hilfsrandbereich abzutrennen, wenn z.B. auf der gegenüberliegenden Seite der Randbereich fehlerfrei auf- bzw. abgetrennt wird oder aufgrund einer Materialeigenschaft des Flachmaterials von selbst aufreißt, wenn ein Hilfsrandbereich abgetrennt wird.

Im Rahmen der Erfindung kann ferner vorgesehen sein, dass die Längstrenneinheit zumindest zwei Längstrennmittel aufweist und/oder dass die Hilfstrenneinheit zumindest zwei Hilfstrennmittel aufweist, wobei die Längstrennmittel und/oder die Hilfstrennmittel dazu ausgebildet sind, das Flachmaterial parallel zu einer Transportrichtung des Flachmaterials aufzutrennen. Dazu können die Längstrennmittel und/oder die Hilfstrennmittel insbesondere symmetrisch zu beiden Seiten des Flachmaterials vorgesehen sein. So können vorzugsweise die Längstrennmittel quer zur Transportrichtung des Flachmaterials relativ zueinander auf gleicher Höhe positioniert sein. Auch die Hilfstrennmittel können vorteilhafterweise quer zur Transportrichtung des Flachmaterials relativ zueinander auf gleicher Höhe angeordnet sein. Dadurch kann auf einfache Art und Weise gewährleistet werden, dass die Kanten, welche beim Auftrennen oder Abtrennen der Randbereiche bzw. der Hilfsrandbereiche entstehen eine hohe Qualität aufweisen, wenn die Auftrennung des Flachmaterials entlang dessen Transportrichtung erfolgt. Insbesondere kann ferner vorgesehen sein, dass die Hilfstrenneinheit lediglich ein Hilfstrennmittel aufweist, welches dazu ausgebildet ist, das Flachmaterial parallel zu einer Transportrichtung des Flachmaterials aufzutrennen, beispielsweise wenn nur der erste oder der zweite Hilfsrandbereich abgetrennt werden soll. Vorzugweise weisen beide Trenneinheiten, die Längstrenneinheit und die Hilfstrenneinheit, zwei Trennmittel auf, wobei die Längstrenneinheit die zwei Längstrennmittel und die Hilfstrenneinheit die zwei Hilfstrennmittel aufweist. Um eine größere Anzahl an Flachbahnen gleichzeitig erzeugen zu können, kann insbesondere die Längstrenneinheit weitere Längstrennmittel aufweisen. Die Längstrennmittel und/oder die Hilfstrennmittel können dabei insbesondere punktuell wirken, sodass lediglich der Schnittbereich durch den Auftrennvorgang beeinflusst wird. Dabei können die Längstrennmittel und/oder die Hilfstrennmittel jeweils an zwei Seiten des Mittelbereiches angeordnet sein, um die Randbereiche bzw. Hilfsrandbereiche abzutrennen. Ferner können die Längstrennmittel und/oder die Hilfstrennmittel oder das Hilfstrennmittel dazu ausgebildet sein, das schlauchförmige Flachmaterial mittels Laser- oder Wasserstrahlschneiden aufzutrennen. Dabei ist durch einen Laser beispielsweise eine gleichzeitige, thermische Versiegelung der einzelnen Kanten der entstehenden Flachbahnen realisierbar, da diese durch den Laser erhitzt werden. Wasserstrahlschneiden wiederum wirkt abrasiv und umweltfreundlich, wobei gleichzeitig keine weiteren Dehnungen, wie beispielsweise thermische Dehnungen, in das Flachmaterial eingebracht werden und somit die mechanischen Eigenschaften des Flachmaterials nicht oder nur geringfügig beeinflusst werden. Insbesondere können sich die Hilfstrennmittel im Hilfsruhezustand der Hilfstrenneinheit mittig oder am Rand des Flachmaterials befinden, so dass das Flachmaterial im Hilfsruhezustand von den Hilfstrennmitteln nicht geschnitten wird. Auch kann sich eines der Hilfstrennmittel mittig befinden und/oder ein anderes Hilfstrennmittel am Rand. Sofern sich die Hilfstrennmittel im Hilfsruhezustand am Rand befinden, kann vorgesehen sein, dass diese beim Überführen vom Hilfsruhezustand in den Hilfstrennzustand quer zur Transportrichtung des Flachmaterials, insbesondere in Richtung des Mittelbereiches, in eine erste Trennposition begeben. Die Längstrennmittel und/oder die Hilfstrennmittel können ferner als bauliche Einheit vorgesehen sein. Es ist jedoch ferner ebenfalls denkbar, dass jeweils eines der Längstrennmittel und/oder eines der Hilfstrennmittel separat ausgebildet ist. So kann die Längstrenneinheit und die Hilfstrenneinheit jeweils an jeder Seite des Flachmaterials eine separate bauliche Einheit aufweisen, welche entsprechend zumindest ein Längstrennmittel und/oder Hilfstrennmittel umfasst.

Vorteilhafterweise kann bei einer erfindungsgemäßen Trennvorrichtung ferner vorgesehen sein, dass die Längstrennmittel und/oder die Hilfstrennmittel zum stationären Auftrennen des Flachmaterials ausgebildet sind. Unter dem stationären Auftrennen durch die Längstrennmittel kann dabei verstanden werden, dass die Längstrennmittel sich nicht entlang einer Trennrichtung bewegen. Somit kann sich lediglich das Flachmaterial entlang einer Transportrichtung des Flachmaterials bewegen und sich relativ zu den Längstrennmitteln und/oder den Hilfstrennmitteln bewegen. Dadurch ist es nicht notwendig für das Auftrennen des Materials einen Antrieb für die Längstrennmittel und/oder die Hilfstrennmittel in Schnittrichtung vorzusehen, sodass hier Kosten eingespart werden können und gleichzeitig ein kontinuierlicher Auftrennvorgang für das schlauchförmige Flachmaterial gewährleistet sein kann. Ein derartiger kontinuierlicher Auftrennvorgang ist insbesondere bei der Blasfolienextrusion von Vorteil, da es sich hier im Wesentlichen um ein Endlosmaterial handeln kann. Alternativ ist es denkbar, dass die Längstrennmittel und/oder die Hilfstrennmittel aktiv entlang einer Trennrichtung verstellbar sind. Dadurch kann eine Trennbewegung relativ zum Flachmaterial, insbesondere unabhängig von der Bewegung des Flachmaterials, realisiert werden.

Es kann im Rahmen der Erfindung ferner vorgesehen sein, dass die Längstrennmittel und/oder die Hilfstrennmittel jeweils ein einseitig gelagertes Schneidelement umfassen. Somit kann eine Lagerung des Schneidelementes lediglich oberhalb des Schneidelementes vorgesehen sein. Durch eine einseitige Lagerung ist es insbesondere nicht notwendig die Trennvorrichtung an beiden Seiten, also z.B. oberhalb und unterhalb, des schlauchförmigen Flachmaterials vorzusehen, sodass diese beispielsweise oberhalb an einem Messerbalken angeordnet sein kann. Das Schneidelement kann vorzugsweise ein mechanisches Schneidelement sein. Dabei kann das Schneidelement einen Anschlag aufweisen. So kann das Schneidelement beispielsweise eine Messerklinge umfassen, welche dazu ausgebildet ist parallel zur Transportrichtung des Flachmaterials einen Schnitt zu bewirken. Ein derartiges mechanisches Schneidelement bietet den Vorteil, dass keine weitere Energie und kein weiteres Medium notwendig ist, welches verbraucht wird. Somit kann auf einfache Art und Weise ein Auftrennen durch die Längstrennmittel und/oder die Hilfstrennmittel realisiert sein. So können die Längstrennmittel vorzugsweise als Seitenschlitzmesser ausgebildet sein, welche zumindest im Wesentlichen parallel zu den entstehenden Flachbahnen des Flachmaterials ausgerichtet sind. Bevorzugt können die Längstrennmittel jedoch senkrecht zu den entstehenden Flachbahnen des Flachmaterials ausgerichtet sein, so dass die Randbereiche abtrennbar sind. Dabei entstehen die Randstreifen als geringfügiger Verschnitt, sodass gewährleistet sein kann, dass die Flachbahnen stets eine konstante Breite aufweisen, sofern das Flachmaterial zumindest die Soll-Schlauchbreite aufweist und auch die Kanten der Flachbahnen durch das Aufschneiden von oben definiert ausgebildet sind. Somit kann sich eine Qualitätssteigerung der Flachbahnen ergeben.

Vorteilhafterweise können bei einer erfindungsgemäßen Trennvorrichtung die Hilfstrennmittel zwischen einer ersten Trennposition und einer zweiten Trennposition verstellbar sein. Dabei können die Hilfstrennmittel insbesondere zumindest im Wesentlichen oder vollständig quer zur Transportrichtung des Flachmaterials verstellbar sein. Wird die Hilfstrenneinheit vom Hilfsruhezustand in den Hilfstrennzustand versetzt, entsteht an der Stelle, an welcher das Hilfstrennmittel positioniert ist, vorzugweise ein Schnitt. Da dieser jedoch relativ zur Längstrenneinheit weiter mittig des Flachmaterials und damit außerhalb eines Randbereiches liegen kann, sodass eine Verbindung des Schnittansatzes mit einer Außenkante des schlauchförmigen Flachmaterials zunächst nicht gegeben ist, hängt der jeweilige Hilfsrandbereich entsprechend sowohl in Schnittrichtung als auch entgegengesetzt zur Schnittrichtung weiterhin mit dem Schlauch zusammen. Wird nun die Soll-Schlauchbreite wieder erreicht, können die Längstrennmittel wieder trennen, sodass parallele Schnitte entstehen können, deren Randbereiche bzw. Hilfsrandbereiche jeweils noch beidseitig mit dem Schlauch zusammenhängen. Während der Hilfsrandbereich je nach Prozessbedingungen einreißen kann, kann somit eine Stelle am Längstrennmittel entstehen, welche nicht getrennt ist, insbesondere wenn der Unterschied zwischen Soll- und Ist-Schlauchbreite, der durch die Hilfstrennmittel berücksichtigt wird, sehr groß ist. Ein Verstellen des Hilfstrennmittels quer zur Transportrichtung bietet daher den Vorteil, dass das Hilfstrennmittel eine Größe des Hilfsrandbereiches reduzieren kann und somit die Differenz zwischen Hilfsrandbereich und Randbereich kleiner wird und damit ein Reißen auch an der Verbindungsstelle begünstigt wird, sodass der Schlauch nicht weiter zusammenhängt. Insbesondere kann beim Überführen der Hilfstrenneinheit vom Hilfsruhezustand in den Hilfstrennzustand ein Zurückführen der Hilfstrennmittel in Richtung der ersten Trennposition vorgesehen sein, vorzugsweise ohne das Flachmaterial zu schneiden.

Vorzugweise kann bei einer erfindungsgemäßen Trennvorrichtung das Hilfstrennmittel jeweils in zumindest zwei Ebenen beweglich ausgestaltet sein, wobei das Überführen vom Hilfsruhezustand in den Hilfstrennzustand durch eine Bewegung der Hilfstrennmittel in jeweils einer ersten Ebene durchführbar ist und die Hilfstrennmittel zwischen der ersten Trennposition und der zweiten Trennposition in jeweils einer zweiten Ebene verstellbar ist. Dabei können die Hilfstrennmittel innerhalb der zweiten Ebene vorzugsweise aufeinander zu und voneinander entfernend bewegt werden. In der ersten Ebene erfolgt vorzugsweise eine parallele Verstellung der Hilfstrennmittel in Richtung des Flachmaterials. Die Verstellung des Hilfstrennmittels kann elektrisch oder hydraulisch ausgeführt sein. Besonders bevorzugt ist hier jedoch, dass die Verstellbarkeit des Hilfstrennmittels pneumatisch ausgebildet ist, wobei eine Pneumatik eine besonders günstige Möglichkeit darstellt, eine Druckerzeugung, die zur pneumatischen Verstellung notwendig ist, zu zentralisieren und somit außerhalb der Trennvorrichtung vorzusehen. Daher kann es beispielsweise ausreichen die Trennvorrichtung entsprechend an ein Pneumatiksystem, welches bereits besteht, anzuschließen. Somit kann das Hilfstrennmittel beispielsweise als mechanisches Hilfstrennmittel mit einem Schneidelement ausgestaltet sein und durch eine Bewegung der Klinge in das Flachmaterial hinein das Überführen der Hilfstrenneinheit vom Hilfsruhezustand in den Hilfstrennzustand realisiert sein.

Es kann ferner bei einer erfindungsgemäßen Trennvorrichtung vorgesehen sein, dass die Hilfstrennmittel in der ersten Trennposition einen Wirkabstand zueinander aufweisen, der geringer ist, als der Wirkabstand zueinander in der zweiten Trennposition. Dabei kann ein Wirkabstand der Längstrennmittel zueinander und der Wirkabstand der Hilfstrennmittel zueinander zumindest im Wesentlichen gleich sein, wenn die Hilfstrennmittel sich in der zweiten Trennposition befinden. Unter dem Wirkabstand kann im Rahmen der vorliegenden Erfindung vorzugsweise ein Abstand verstanden werden, unter welchem das Flachmaterial aufgetrennt wird. So kann der Wirkabstand gleich dem Abstand der Hilfs- bzw. Längstrennmittel und/oder gleich dem Abstand der Schneidelemente sein. Ferner kann der Wirkabstand auch gleich einer Breite der entstehenden Flachbahnen sein. Somit bietet dies den Vorteil, dass bei Querverstellung die Hilfstrennmittel senkrecht zur Transportrichtung des Flachmaterials auf etwa der gleichen Höhe sind, sodass ein Schnitt der Hilfstrennmittel sich mit einem Schnitt der Längstrennmittel überdeckt oder im Wesentlichen überdeckt. Damit kann ein abgeschnittener Hilfsrandbereich mit einem abgeschnittenen Randbereich derart vereinigt werden, dass die Flachbahnen problemlos weiter aufgewickelt werden können, ohne durch einen zusammenhängenden Abschnitt eine Konfusion der Wickelvorrichtungen zu verursachen.

Es ist ferner denkbar, dass bei einer erfindungsgemäßen Trennvorrichtung die Längstrennmittel derart positioniert sind, dass die Randbereiche jeweils eine Randbreite von bis zu 500 mm, bevorzugt 10 bis 70 mm, besonders bevorzugt 20 bis 50 mm aufweisen. Derartige Randbereiche bieten eine ausreichende Sicherheit gegenüber geringfügigen Schwankungen des Durchmessers des schlauchförmigen Flachmaterials, welche beispielsweise aufgrund von Toleranzen in Prozessparametern entstehen können, wobei für größere Schwankungen weiterhin die Hilfstrennmittel zur Verfügung stehen.

Es kann bei einer erfindungsgemäßen Trennvorrichtung ferner vorgesehen sein, dass eine Trennrichtung der Hilfstrenneinheit in der ersten und zweiten Trennposition parallel zu einer Trennrichtung der Längstrenneinheit orientiert ist. Dabei können die Hilfstrennmittel insbesondere derart ausgebildet sein, dass die Trennrichtung der Hilfstrenneinheit auch bei Verstellung der Hilfstrennmittel von der ersten in die zweite Trennposition parallel zur Trennrichtung der Längstrenneinheit ist. Somit können auch die Schnitte zumindest abschnittsweise parallel verlaufen, sodass eine einfache Möglichkeit gegeben ist, diese zu vereinigen und auch ein Einreißen zwischen den Schnitten begünstigt ist, wobei der jeweilige Randbereich möglichst vollständig abreißt und damit eine Konfusion der Wickelvorrichtungen verhindert ist.

Es ist ferner denkbar, dass die Längstrenneinheit bei einer erfindungsgemäßen Trennvorrichtung von einem Hauptruhezustand, in welchem die Längstrenneinheit deaktiviert ist, in einen Haupttrennzustand, in welchem die Randbereiche durch die Längstrenneinheit auftrennbar oder abtrennbar sind, bringbar ist. Insbesondere kann das Überführen der Längstrenneinheit vom Hauptruhezustand in den Haupttrennzustand instantan oder innerhalb von 30 Sekunden erfolgen. Durch die beiden Zustände der Längstrenneinheit ist es möglich, diese beispielsweise zu deaktivieren, wenn die Ist-Schlauchbreite kleiner ist als die Soll-Schlauchbreite, sodass auch ein umgekehrtes Überführen der Längstrenneinheit vom Haupttrennzustand in den Hauptruhezustand möglich ist, wenn die Trennung der Randbereiche vom Mittelbereich des Flachmaterials wieder durch die Längstrenneinheit übernommen werden soll, nachdem die Hilfstrenneinheit einen der Hilfsrandbereiche abgetrennt hat. Wird die Längstrenneinheit zuvor nicht deaktiviert, kann eine Trennung durch die Längstrennmittel unsauber verlaufen, wenn die Ist-Schlauchbreite wieder die Soll-Schlauchbreite erreicht. So kann beispielsweise die Folie entsprechend von den Längstrennmitteln abgelenkt werden, sodass diese nicht oder kaum schneiden. Auch ein schlagartiges Herstellen des Haupttrennzustandes vom Hauptruhezustand der Längstrenneinheit ist hier von Vorteil, wobei die Längstrennmittel beschleunigt werden, sodass beispielsweise der Haupttrennzustand vom Hauptruhezustand in unter 30 Sekunden, insbesondere in unter 5 Sekunden erreicht wird. Bei einem instantanen Erreichen des Haupttrennzustands kann beispielsweise ein Laser aktiviert werden, so dass ein apruptes Trennen des Flachmaterials möglich ist. Auch dadurch kann ein Einreißen zwischen von den Längstrennmitteln abgetrennten Randbereichen und von den Hilfstrennmitteln abgetrennten Hilfsrandbereichen begünstigt sein.

Im Rahmen der Erfindung kann ferner vorgesehen sein, dass eine Aufnahmeeinheit vorgesehen ist, durch welche die Randbereiche und/oder die Hilfsrandbereiche aufnehmbar sind. Durch die Aufnahmeeinheit kann gewährleistet sein, dass die Randbereiche und/oder die Hilfsrandbereiche in definierter Art und Weise aus dem Prozess entfernt werden und beispielsweise einem Recycling zugeführt werden können. Dadurch kann die Prozesssicherheit insgesamt gesteigert sein, da die Rand- und/oder Hilfsrandbereiche keine störende Wirkung auf den Herstellungsprozess der Flachbahnen haben.

Es ist ferner denkbar, dass bei einer erfindungsgemäßen Trennvorrichtung die Aufnahmeeinheit zumindest ein Absaugmittel umfasst, durch welches die Randbereiche und/oder die Hilfsrandbereiche, insbesondere aktiv, abführbar sind. Das Absaugmittel kann vorzugsweise ein Gebläse aufweisen, durch welches die Randbereiche und/oder die Hilfsrandbereiche aktiv absaugbar sind. Dadurch kann das Entfernen der Randbereiche und/oder Hilfsrandbereiche aus dem Prozess zuverlässig und insbesondere automatisiert durchführbar sein. Insbesondere kann das Absaugmittel derart ausgestaltet sein, dass es mit der Längstrenneinheit und der Hilfstrenneinheit verbunden ist oder dass es von der Längstrenneinheit und/oder der Hilfstrenneinheit baulich getrennt ist. Dies kann je nach Anforderungen an Bauraum und Vernetzungsgrad zur Datenkommunikation der Trennvorrichtung variieren. Vorzugsweise kann die Trennvorrichtung, insbesondere die Aufnahmeeinheit, ein Zuführmittel aufweisen, welches dazu ausgebildet ist, die Randbereiche und/oder Hilfsrandbereiche der Aufnahmeeinheit automatisch zuzuführen. So kann ein automatisierter Greifer oder beispielsweise eine Gummiwalze vorgesehen sein, um die Randbereiche und/oder Hilfsrandbereiche aufzunehmen und der Aufnahmeeinheit zuzuführen. Dabei kann das Zuführmittel mit der Steuereinheit in Kommunikationsverbindung stehen. Somit kann der Automatisierungsgrad der Trennvorrichtung weiter erhöht sein, so dass Kosten eingespart werden können und die Prozesssicherheit verbessert sein kann.

Vorteilhafterweise kann bei einer erfindungsgemäßen Trennvorrichtung eine Sensoreinheit vorgesehen sein, durch welche eine Abweichung der Ist-Schlauchbreite von der Soll-Schlauchbreite des Flachmaterials erkennbar ist. Dadurch ist beispielsweise eine automatische Aktivierung der Hilfstrenneinheit möglich. Weiterhin kann durch die Sensoreinheit die Genauigkeit und die Reaktionsfähigkeit der Trennvorrichtung weiter gesteigert sein, da die Überwachung der Ist-Schlauchbreite automatisch durchführbar ist. So kann beispielsweise ein Signal vorgesehen sein, welches einen Maschinenbediener warnt, dass eine Ist-Schlauchbreite unterhalb einer Soll-Schlauchbreite liegt, sodass dieser manuell reagieren kann. Die Sensoreinheit kann dabei beispielsweise Ultraschallsensor oder als Näherungssensor ausgebildet sein und kapazitiv arbeiten. Vorzugsweise ist die Sensoreinheit jedoch eine optische Sensoreinheit, welche für unterschiedlichste Materialien geeignet ist und gleichzeitig eine hohe Reichweite aufweisen kann, sodass es nicht notwendig ist, die Sensoreinheit unmittelbar am Flachmaterial anzuordnen. Die erkannte Abweichung kann qualitativ und/oder quantitativ sein. So ist es beispielsweise denkbar, dass die Sensoreinheit dazu ausgebildet ist, einen Unterschied zwischen Soll- und Ist-Schlauchbreite als tatsächliches Maß zu erfassen oder, dass die Sensoreinheit dazu ausgebildet ist, lediglich festzustellen, ob Flachmaterial an einer bestimmten Position vorhanden ist oder nicht. Somit kann die Sensoreinheit beispielsweise angeordnet sein, um einen Bereich der Randbereiche zu überwachen. Stellt die Sensoreinheit fest, dass diesen Bereich kein Flachmaterial durchläuft, kann dies darauf schließen lassen, dass die Soll-Schlauchbreite zum entsprechenden Zeitpunkt nicht erreicht ist.

Im Rahmen der Erfindung kann ferner vorgesehen sein, dass die Längstrenneinheit und/oder die Hilfstrenneinheit der Sensoreinheit in Bezug auf eine Transportrichtung des Flachmaterials nachgeordnet ist. Somit kann die Sensoreinheit eine Abweichung der Ist-Schlauchbreite von der Soll-Schlauchbreite bereits detektieren, bevor die Längstrenneinheit außerhalb des Flachmaterials liegt, und folglich die Hilfstrenneinheit aktivierbar ist, insbesondere sodass an jeder Stelle entlang der Transportrichtung des Flachmaterials zumindest ein Schnitt eingebracht werden kann.

Es kann vorteilhafterweise bei einer erfindungsgemäßen Trennvorrichtung vorgesehen sein, dass eine Steuereinheit mit der Sensoreinheit und/oder einer ersten Antriebseinheit zum Antrieb zumindest eines der Hilfstrennmittel und/oder einer zweiten Antriebseinheit zum Antrieb zumindest eines der Längstrennmittel in Kommunikationsverbindung steht, insbesondere sodass ein Überführen der Hilfstrenneinheit vom Hilfsruhezustand in den Hilfstrennzustand und/oder der Längstrenneinheit vom Hauptruhezustand in den Haupttrennzustand automatisch durchführbar ist. Dadurch kann die Automatisierung des Verfahrens weiter gesteigert sein, sodass auch die Reaktionsfähigkeit der Trennvorrichtung weiter gesteigert sein kann. Insgesamt kann dies die Prozesssicherheit beim Auftrennen des schlauchförmigen Flachmaterials weiter erhöhen, da die Trennvorrichtung unabhängig von einer menschlichen Reaktionszeit ist. Durch den erhöhten Automatisierungsgrad kann zusätzlich eine Kostenreduktion entstehen. Die Antriebseinheiten können zwei baulich getrennte Antriebe sein oder beispielsweise Baugruppen oder Teilbereiche eines zentralen, insbesondere pneumatischen, Antriebs. Insbesondere kann die Steuereinheit dazu ausgebildet sein, die Längstrenneinheit und die Hilfstrenneinheit, insbesondere die Längstrennmittel und die Hilfstrennmittel, gemeinsam anzusteuern.

Erfindungsgemäß kann ferner vorgesehen sein, dass die Hilfstrenneinheit dazu ausgebildet ist, instantan oder innerhalb von 30 Sekunden vom Hilfsruhezustand in den Hilfstrennzustand gebracht zu werden. Wie auch bereits im Rahmen der Längstrenneinheit beschrieben, ist es von Vorteil, wenn das Einbringen des Schnittes durch die Hilfstrenneinheit möglichst schnell erfolgt, wenn dies benötigt wird, um zum einen einen Abriss der Randbereiche zu gewährleisten und zum anderen einen sauberen Einschnitt zu begünstigen. Dabei kann für einen instantanen Wechsel vom Hilfsruhezustand in den Hilfstrennzustand beispielsweise ein Aktivieren eines Lasers vorgesehen sein und bei einem schlagartigen Wechsel vom Hilfsruhezustand in den Hilfstrennzustand kann beispielsweise eine Beschleunigung der Hilfstrennmittel vorgesehen sein, sodass die Hilfstrennmittel der Hilfstrenneinheit weniger als 30 Sekunden, bevorzugt in weniger als 5 Sekunden in das Flachmaterial eingebracht werden.

Es ist ferner denkbar, dass bei einer erfindungsgemäßen Trennvorrichtung eine Quertrenneinheit vorgesehen ist, die dazu ausgebildet ist, das Flachmaterial zumindest abschnittsweise, insbesondere senkrecht zu einer Transportrichtung des Flachmaterials, zu durchtrennen. Dabei kann die Quertrenneinheit der Längstrenneinheit und/oder der Hilfstrenneinheit vorzugsweise vor- oder nachgeordnet sein. Sofern die Ist-Schlauchbreite unterhalb der Soll-Schlauchbreite gelegen hat, kann es sinnvoll sein, die Wickelrollen, die auf Wickelhaltern von Wickelvorrichtungen montiert sind, auszutauschen, um mittels des Rollenwechsels neue Wickelrollen zu beginnen. So können beispielsweise die alten Wickelrollen nicht mehr verkaufsfähig sein, wenn die Breitenschwankung des Flachmaterials zu hoch war. Um auch bei diesem Wechsel eine ausreichende Geschwindigkeit zu ermöglichen, sodass während des Wechsels möglichst wenig Ausschuss produziert wird, kann die Quertrenneinheit helfen, das Flachmaterial, insbesondere die Flachbahn quer durchzutrennen, um somit einen neuen Ansatzpunkt für eine neue Wickelrolle zu erhalten. Die Quertrenneinheit kann dazu ausgebildet sein, den Mittelbereich des Flachmaterials zu durchtrennen. Weiterhin kann durch die Quertrenneinheit ermöglicht werden, verbliebene Verbindungsbereiche zwischen den Hilfsrandbereichen und dem Mittelbereich und/oder den Randbereichen zu durchtrennen, insbesondere wenn keine Rissbildung auftritt.

Insbesondere ist es bei sämtlichen, zuvor beschriebenen Ausgestaltungen einer Trennvorrichtung mit mehreren Hilfstrennmitteln denkbar, dass anstelle mehrerer Hilfstrennmittel lediglich ein Hilfstrennmittel vorgesehen ist, so dass lediglich einer der Hilfsrandbereiche durch die Hilfstrenneinheit abtrennbar ist. Dadurch kann für bestimmte Anwendungsfälle eine einfache, kostengünstigere Ausgestaltung geschaffen sein.

Im Rahmen der Erfindung kann ferner vorgesehen sein, dass eine Positionierung der Hilfstrenneinheit an eine Positionierung der Längstrenneinheit zumindest teilweise gekoppelt ist. Es ist beispielsweise denkbar, dass die Hilfstrenneinheit und die Längstrenneinheit, insbesondere quer zur Transportrichtung des Flachmaterials und/oder entlang der Transportrichtung des Flachmaterials, verschiebbar ausgebildet sind. Die Längstrenneinheit und/oder die Hilfstrenneinheit können somit lösbar und feststellbar sein. So kann es beispielsweise vorteilhaft sein, das Auftrennen des Flachmaterials je nach Art des herzustellenden Flachmaterials in Richtung oder entgegen der Transportrichtung später oder früher im Prozess vorzunehmen. Auch eine Anpassung der Soll-Schlauchbreite kann dadurch anpassbar sein, dass die Längstrenneinheit quer zur Transportrichtung des Flachmaterials verstellbar ist. Ist dabei die Hilfstrenneinheit beispielsweise derart mit der Längstrenneinheit gekoppelt, dass eine Verstellung der Längstrenneinheit eine korrespondierende, insbesondere gleiche, Verstellung der Hilfstrenneinheit bewirkt, erleichtert dies einem Benutzer die Verstellung, da es insbesondere nicht notwendig sein kann, die entsprechende Positionierung der Hilfstrenneinheit zusätzlich anzupassen. Die Kopplung der Hilfstrenneinheit und der Längstrenneinheit kann baulich, d.h. strukturell, oder steuerungstechnisch realisiert sein.

Gemäß einem weiteren Aspekt der Erfindung ist ein System mit einer erfindungsgemäßen Trennvorrichtung zum Auftrennen eines schlauchförmigen Flachmaterials in zumindest zwei Flachbahnen beansprucht. Dabei ist der Trennvorrichtung in einer Transportrichtung des Flachmaterials zumindest eine erste Wickelvorrichtung und eine zweite Wickelvorrichtung nachgeordnet, sodass durch die Wickelvorrichtungen jeweils zumindest eine der Flachbahnen auf einer Wickelrolle, welche auf einem Wickelhalter der Wickelvorrichtung montierbar ist, aufwickelbar ist. Insbesondere ist ferner eine Aufnahmeeinheit, vorzugsweise mit zumindest zwei Aufnahmemitteln, vorgesehen, durch welche Randbereiche, vorzugsweise welche durch die Trennvorrichtung von einem Mittelbereich des Flachmaterials abtrennbar sind, absaugbar sind, und/oder durch welche zumindest ein Hilfsrandbereich, welcher durch die Trennvorrichtung von einem Mittelbereich des Flachmaterials abtrennbar ist, absaugbar ist. Insbesondere können zumindest zwei Hilfsrandbereiche, welche durch die Trennvorrichtung von einem Mittelbereich des Flachmaterials abtrennbar sind, durch die Aufnahmeeinheit, vorzugsweise durch die Aufnahmemittel, absaugbar sein. Somit bringt ein erfindungsgemäßes System die gleichen Vorteile mit sich, wie sie ausführlich mit Bezug auf eine erfindungsgemäße Trennvorrichtung beschrieben worden sind. Vorzugsweise ist die Trennvorrichtung dabei im Bereich eines Vorzuges des Flachmaterials angeordnet, welcher das Flachmaterial zu den Wickelvorrichtungen gelenkt und/oder befördert. Die Aufnahmeeinheit kann dabei von der Trennvorrichtung baulich getrennt sein oder in die Trennvorrichtung integriert sein. Unter der Nachordnung der Wickelvorrichtungen in Bezug auf die Trennvorrichtung kann weiterhin eine Nachordnung im Prozess verstanden werden, so dass das Flachmaterial zunächst die Trennvorrichtung durchläuft, bevor es auf die Wickelvorrichtungen aufgewickelt werden kann. Vorzugsweise kann die Trennvorrichtung wiederum zumindest einem Führungsmittel, bevorzugt zwei rollenförmigen Führungsmitteln, nachgeordnet sein, so dass das schlauchförmige Flachmaterial im Durchmesser gestaucht wird und sich zwei im Wesentlichen parallele Bereiche ergeben, aus welchen die Flachbahnen herstellbar sind.

Gemäß einem weiteren Aspekt der Erfindung ist ein Trennverfahren zum Auftrennen eines schlauchförmigen Flachmaterials beansprucht. Dabei umfasst das Trennverfahren folgende Schritte:
- Auftrennen oder Abtrennen eines ersten und eines zweiten Randbereiches des Flachmaterials, insbesondere durch eine Längstrenneinheit,
- Überführen einer Hilfstrenneinheit einer Trennvorrichtung, insbesondere einer erfindungsgemäßen Trennvorrichtung, wie zuvor beschrieben, von einem Hilfsruhezustand in einen Hilfstrennzustand, vorzugsweise wenn die Ist-Schlauchbreite kleiner ist als eine Soll-Schlauchbreite,
- Abtrennen von zumindest einem Hilfsrandbereich, vorzugsweise von zumindest zwei Hilfsrandbereichen, von einem Mittelbereich des Flachmaterials durch die Hilfstrenneinheit im Hilfstrennzustand.

Damit bringt ein erfindungsgemäßes Trennverfahren die gleichen Vorteile mit sich, wie sie ausführlich mit Bezug auf eine erfindungsgemäße Trennvorrichtung beschrieben worden sind. Insbesondere handelt es sich um ein besonders einfaches Verfahren, welches kostengünstig und mit einem hohen Automatisierungsgrad durchführbar ist. Dabei wird eine Konfusion von Wickelvorrichtungen vermieden, da ein stetiges Auftrennen oder Abtrennen von Randbereichen bzw. Hilfsrandbereichen und damit ein stetiges Entstehend von Flachbahnen aus einem schlauchförmigen Flachmaterial realisierbar ist.

Es ist bei einem erfindungsgemäßen Trennverfahren ferner denkbar, dass das Trennverfahren folgenden Schritt umfasst:
- Überwachen einer Ist-Schlauchbreite des Flachmaterials,
wobei das Überführen der Hilfstrenneinheit vom Hilfsruhezustand in den Hilfstrennzustand durchgeführt wird, wenn die Ist-Schlauchbreite kleiner ist als eine Soll-Schlauchbreite. Dadurch kann bei einer ungeplanten Durchmesserreduktion des Schlauches diese insbesondere automatisch erkannt werden und mittels der Hilfstrenneinheit kann darauf reagiert werden.

Zusätzlich oder alternativ ist es denkbar, dass das Trennverfahren folgenden Schritt umfasst:
- Überwachen eines Trennstatus einer Längstrenneinheit der Trennvorrichtung,
wobei das Überführen der Hilfstrenneinheit vom Hilfsruhezustand in den Hilfstrennzustand durchgeführt wird, das Auftrennen der Randbereiche des Flachmaterials unterbrochen ist. Dabei kann das Überwachen des Trennstatus der Längstrenneinheit und das Überwachen der Ist-Schlauchbreite auch gleichzeitig ausgeführt werden und insbesondere zusammen einen einzelnen Schritt bilden. Unter dem Trennstatus der Längstrenneinheit kann vorzugsweise eine Position von Längstrennmitteln der Längstrenneinheit verstanden werden. Das Überwachen des Trennstatus der Längstrenneinheit und das Überführen der Hilfstrenneinheit vom Hilfsruhezustand in den Hilfstrennzustand können vorzugsweise dann durchgeführt werden, wenn die Längstrenneinheit Längstrennmittel in Form von Seitenschlitzmessern aufweist oder anderweitig unabhängig von der Schlauchbreite mit dem Flachmaterial außer Eingriff gelangen kann, so dass auch auf eine vom Schlauch unabhängige Fehlersituation reagiert werden kann.

Im Rahmen der Erfindung kann weiterhin folgender Schritt vorgesehen sein:
- Verstellen von Hilfstrennmitteln der Hilfstrenneinheit von einer ersten Trennposition in eine zweite Trennposition, insbesondere quer zu einer Transportrichtung des Flachmaterials, insbesondere wobei die Hilfstrenneinheit in den Hilfsruhezustand überführt wird, nachdem die Hilfstrennmittel die zweite Trennposition erreicht haben.

Der Wechsel vom Hilfstrennzustand in den Hilfsruhezustand kann jedoch auch bereits bei der Querverstellung erfolgen, beispielsweise wenn der Wirkabstand zwischen Längstrennmitteln und Hilfstrennmitteln bereits derart gering ist, dass ein Riss begünstigt, und damit insbesondere ausreichend wahrscheinlich, ist. Somit kann auch die Hilfstrenneinheit bereits im Hilfsruhezustand sein, wenn die zweite Trennposition erreicht wird. Die Querverstellung dient dabei einer Reduzierung des Unterschiedes zwischen einem Hilfsrandbereich und einem Randbereich, sodass hier ein Einreißen begünstigt, die Schlauchform des Flachmaterials aufgetrennt ist und damit kein Randbereich mit einer umlaufenden Kante erhalten bleibt, so dass eine Konfusion vermieden wird. Ebenso kann ein Zustandswechsel der Längstrenneinheit durchgeführt werden, wobei die Längstrenneinheit von einem Haupttrennzustand in einen Hauptruhezustand und umgekehrt überführt werden kann. Dies hat die bereits im Zusammenhang mit der Trennvorrichtung beschriebenen Vorteile.

Es kann erfindungsgemäß ferner vorgesehen sein, dass die Randbereiche und/oder die Hilfsrandbereiche, insbesondere aktiv, separat abgeführt werden. Dies bietet den Vorteil, dass diese beispielsweise einem Recycling zugeführt werden können und aus dem Prozess sicher entfernt werden können, sodass die Randbereiche keine störende Wirkung des Prozesses haben. Insbesondere kann zumindest eine Randstreifenwickelvorrichtung vorgesehen sein, durch welche die Randbereiche und/oder die Hilfsrandbereiche aufwickelbar sein können, wodurch diese sicher entfernbar sein können.

Es ist ferner denkbar, dass bei einem erfindungsgemäßen Trennverfahren das Überwachen der Ist-Schlauchbreite des Flachmaterials ein Auswerten von Sensorsignalen umfasst. Dabei kann die Ist-Schlauchbreite optisch überwacht werden. Somit ist ein hoher Automatisierungsgrad des Verfahrens erreichbar. Eine optische Überwachung bietet dabei den Vorteil, dass eine zuverlässige Überwachung unterschiedlichster Materialien insbesondere kostengünstig realisiert werden kann.

Es ist ferner denkbar, dass das Überführen der Hilfstrenneinheit vom Hilfsruhezustand in den Hilfstrennzustand automatisch erfolgt. Dies bietet den Vorteil, dass die Reaktionszeit beim Feststellen einer Abweichung der Ist-Schlauchbreite von der Soll-Schlauchbreite definiert und insbesondere reduziert sein kann, sodass die Prozesssicherheit insgesamt erhöht ist. Weiterhin ist auch hier durch den erhöhten Automatisierungsgrad eine Kostenreduktion möglich. Ferner kann das Überführen der Längstrenneinheit vom Hauptruhezustand in den Haupttrennzustand und umgekehrt automatisch erfolgen, um einen weiterhin erhöhten Automatisierungsgrad zu erreichen. Alternativ kann das Überführen der Längstrenneinheit vom Hauptruhezustand in den Haupttrennzustand manuell erfolgen, sodass hier Kosten für einen automatischen Antrieb eingespart werden können.

Es kann ferner vorgesehen sein, dass bei einem erfindungsgemäßen Trennverfahren sich das Flachmaterial zumindest beim Auftrennen des Flachmaterials, insbesondere während des gesamten Trennverfahrens, relativ zur Trennvorrichtung bewegt. Dadurch können beispielsweise stationäre Hilfstrennmittel und/oder stationäre Längstrennmittel vorgesehen sein, welche besonders einfach und kostengünstig ausgeführt sein können. Weiterhin ist ein kontinuierlicher Schnitt insbesondere eines unendlichen Materialstroms, möglich.

Im Rahmen der Erfindung kann ferner vorgesehen sein, dass weiterhin folgender Schritt vorgesehen ist:
- Zumindest abschnittsweises Durchtrennen des Flachmaterials, insbesondere senkrecht zu einer Transportrichtung des Flachmaterials.

So kann beispielsweise der Mittelbereich des Flachmaterials durchtrennt werden. Dadurch ist es möglich, einen Wickelrollenwechsel an einer Wickelvorrichtung vorzunehmen, ohne den Prozess lange zu unterbrechen, sodass möglichst schnell ein verkaufbares Produkt hoher Qualität erneut eingestellt werden kann und während der Zeit des Wechsels ein lediglich geringer oder kein Ausschuss produziert wird. Weiterhin können auch die Randbereiche und/oder Hilfsrandbereiche quer durchtrennt werden, um beispielsweise verbliebene Verbindungsstücke aufzutrennen.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehenden Merkmale und/oder Vorteile, einschließlich konstruktiver Einzelheiten, räumliche Anordnungen und Verfahrensschritte können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Fig. 1: ein erfindungsgemäßes Trennverfahren mit einer erfindungsgemäßen Trennvorrichtung zu unterschiedlichen Zeitpunkten in einem ersten Ausführungsbeispiel,
- Fig. 2: die erfindungsgemäße Trennvorrichtung des ersten Ausführungsbeispiels in schematischer Frontansicht,
- Fig. 3: ein erfindungsgemäßes System mit einer erfindungsgemäßen Trennvorrichtung in einem zweiten Ausführungsbeispiel,
- Fig. 4: das System des zweiten Ausführungsbeispiels in schematischer Seitenansicht,
- Fig. 5: eine erfindungsgemäße Trennvorrichtung in einem weiteren Ausführungsbeispiel,
- Fig. 6: ein erfindungsgemäßes Trennverfahren in einem weiteren Ausführungsbeispiel in schematischer Darstellung,
- Fig. 7: ein Schnittverlauf in einem schlauchförmigen Flachmaterial mit einer erfindungsgemäßen Trennvorrichtung in einem weiteren Ausführungsbeispiel,

In den nachfolgenden Figuren werden für die gleichen technischen Merkmale auch von unterschiedlichen Ausführungsbeispielen identische Bezugszeichen verwendet.

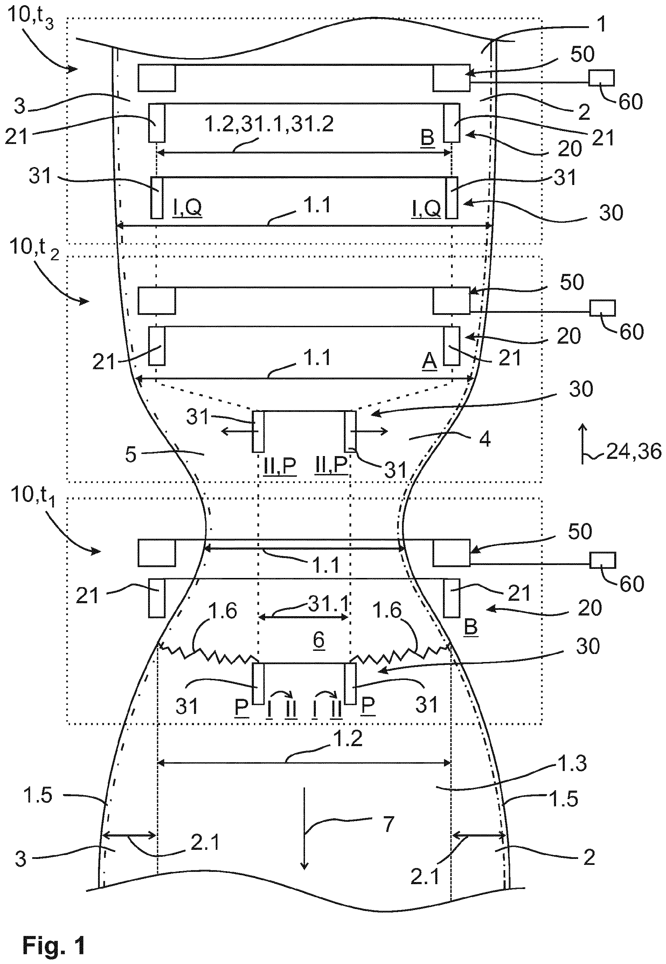

Figur 1 zeigt drei unterschiedliche Zeitpunkt t₁ bis t₃ eines erfindungsgemäßen Trennverfahrens 100 mittels einer erfindungsgemäßen Trennvorrichtung 10 in schematischer Draufsicht eines ersten Ausführungsbeispiels. Dabei weist die Trennvorrichtung 10 eine Längstrenneinheit 20 zum Abtrennen eines ersten Randbereiches 2 und eines zweiten Randbereiches 3 auf. Dazu sind zu beiden Seiten eines schlauchförmigen Flachmaterials 1 Längstrennmittel 21 vorgesehen, welche einen ersten Randbereich 2 und einen zweiten Randbereich 3 des Flachmaterials 1 entlang einer Transportrichtung 7 des Flachmaterials 1 stationär abtrennen, insbesondere in einer Trennrichtung 24 der Längstrenneinheit 20, entgegen welcher ein Schnitt entsteht, können. Die Längstrennmittel 21 sind zum Zeitpunkt t₁ derart angeordnet, dass die Längstrenneinheit 20 sich im Haupttrennzustand B befindet und das Material schneiden kann. Weiterhin ist eine Hilfstrenneinheit 30 vorgesehen, welche sich im Zeitpunkt t₁ noch im Hilfsruhezustand I befindet und damit das Flachmaterial 1 nicht schneidet. Erkennt nun eine Sensoreinheit 50, wie im Zeitpunkt t₁ dargestellt, dass eine Soll-Schlauchbreite 1.2 von einer Ist-Schlauchbreite 1.1 des Flachmaterials 1 abweicht oder dass das Auftrennen der Randbereiche 2, 3 unterbrochen ist, beispielsweise weil ein Trennstatus der Längstrennmittel 21 außer Eingriff ist, kann dies an eine Steuereinheit 60 gemeldet werden. Die Ist-Schlauchbreite 1.1 kann dabei beispielsweise daraus resultieren, dass das schlauchförmige Flachmaterial 1 im Bereich seiner Entstehung eingefallen ist und damit nicht mehr die gleiche Ausbreitungsweite aufweist, wie zuvor. So kann der Schlauch des Flachmaterials 1 beispielsweise einen geringeren Durchmesser haben oder, z.B. in Folge einer Fehlfunktion, in der Mitte aufgebäumt sein, sodass zumindest in Bezug auf die Längstrenneinheit 20 die Ist-Schlauchbreite 1.1 gering ist. Die Soll-Schlauchbreite 1.2 kann beispielsweise durch einen Wirkabstand 31.2 der Längstrennmittel 21 vorgegeben sein oder durch einen beliebigen anderen Wirkabstand, in welchem es noch sinnvoll ist, mittels der Längstrenneinheit 20 die Randbereiche 2, 3 abzutrennen. Somit kann im Zeitpunkt t₁ die Sensoreinheit 50 das Signal geben, dass die erfasste Ist-Schlauchbreite 1.1 kleiner ist als die Soll-Schlauchbreite 1.2 oder dass das Auftrennen der Randbereiche 2, 3 unterbrochen ist, sodass die Hilfstrenneinheit 30 vom Hilfsruhezustand I, vorzugsweise innerhalb von 30s, bevorzugt innerhalb von 5s, in einen Hilfstrennzustand II überführt wird. Dabei wird die Hilfstrenneinheit 30 aktiviert, wobei die Hilfstrennmittel 31 der Hilfstrenneinheit 30 in das Flachmaterial 1 (in die Zeichnungsebene), insbesondere jeweils in einer ersten Ebene 33, bewegt werden, sodass die Hilfstrennmittel 31 das Flachmaterial 1, insbesondere in einer zur Trennrichtung 24 der Längstrenneinheit 20 parallelen Trennrichtung 36 der Hilfstrenneinheit 30, schneiden, so dass ein Schnitt entgegen der Trennrichtung 36 entsteht. Zusätzlich oder alternativ ist denkbar, dass das Aktivieren der Hilfstrennmittel 31 ein Aktivieren von einem Laser oder von einem Wasserstrahl umfasst. Ferner kann zu diesem Zeitpunkt t₁ auch bereits vorgesehen sein, dass die Längstrenneinheit 20 vom Haupttrennzustand B in einen Hauptruhezustand A überführt wird, wobei die Längstrenneinheit 20 deaktiviert wird, und die Längstrennmittel 21 entsprechend das Flachmaterial 1 nicht schneiden. Somit erfolgt entsprechend der Darstellung bis zum Zeitpunkt t₂, dass ein erster und ein zweiter Hilfsbereich 4, 5 von einem Mittelbereich 6 des Flachmaterials 1 abgetrennt werden. Im Zeitpunkt t₂ kann die Sensoreinheit 50 ferner erkennen, dass die Ist-Schlauchbreite 1.1 wieder größer oder gleich der Soll-Schlauchbreite 1.2 ist. Dementsprechend erfolgt ein Signal, dass die Hilfstrennmittel 31 der Hilfstrenneinheit 30 von einer ersten Trennposition P in eine zweite Trennposition Q, insbesondere in einer zweiten Ebene 34 (Zeichenebene), verfahren werden können. Diese Bewegung erfolgt quer bzw. senkrecht zur Transportrichtung 7 des Flachmaterials 1, sodass in Überlagerung mit der Transportbewegung entlang der Transportrichtung 7 des Flachmaterials 1 ein Schnitt mit einem Winkel zur Transportrichtung 7 entsteht. Die Verstellung zwischen der ersten Trennposition P und der zweiten Trennposition Q ist dabei derart ausgestaltet, dass die Hilfstrennmittel 31 in der ersten Trennposition P einen Wirkabstand 31.1 zueinander aufweisen, der geringer ist als der Wirkabstand 31.1 der Hilfstrennmittel 31 zueinander in der zweiten Trennposition Q. Der Wirkabstand 31.1 der Hilfstrennmittel 31 zueinander in der zweiten Trennposition Q entspricht ferner vorzugsweise dem Wirkabstand 31.2 der Längstrennmittel 21 zueinander. Da das Auftrennen der Längstrenneinheit 20 und der Hilfstrenneinheit 30 parallel zueinander durchgeführt wird, hängen der erste Randbereich 2 und ein erster Hilfsrandbereich 4 bzw. der zweite Randbereich 3 und ein zweiter Hilfsrandbereich 5 nicht zusammen, was dazu führt, dass zumindest der erste Hilfsrandbereich und der zweite Hilfsrandbereich 4, 5 zwischen den Zeitpunkten t₁ und t₂ noch mit dem schlauchförmigen Flachmaterial 1 zusammenhängen können. Insbesondere ausgehend von einem Faltbereich 1.5, in welchem zwei Flachbahnen 1.3, 1.4 des schlauchförmigen Flachmaterials 1 noch immer zusammenhängen können, wird, insbesondere im Laufe des Abtrennvorgangs, jedoch beidseitig jeweils ein Riss 1.6, z.B. aufgrund von Kerbwirkung in den Faltbereichen 1.5, entstehen bzw. sich ausbreiten, welcher den ersten Hilfsrandbereich 4 bzw. den zweiten Hilfsrandbereich 5 im unteren Bereich vereinzelt. Zusätzlich oder alternativ, insbesondere bei ausbleibender Rissbildung, kann hier eine Quertrenneinheit 80 eingesetzt werden, um die verbleibende Verbindungsstelle aufzutrennen. Damit der erste und zweite Hilfsrandbereich 4, 5 auch im oberen Bereich, insbesondere nach dem Zeitpunkt t₂, abgeführt werden können und die Flachbahnen 1.3, 1.4 nicht noch an einer Stelle zusammenhängen, erfolgt die Verstellung der Hilfstrennmittel 31 zwischen den Trennpositionen P, Q. Ist durch die Hilfstrennmittel 31 die zweite Trennposition Q erreicht, kann entsprechend auch die Längstrenneinheit 20, insbesondere instantan oder innerhalb von 30 Sekunden, bevorzugt 5 Sekunden, vom Hauptruhezustand A in den Haupttrennzustand B versetzt werden, sodass die Längstrennmittel 21 das Flachmaterial 1 auftrennen. Somit kann die Auftrennfunktion der Hilfstrenneinheit 30 an die Längstrenneinheit 20 übergeben sein, da sich der erste Randbereich 2 und der erste Hilfsrandbereich 4 bzw. der zweite Randbereich 3 und der zweite Hilfsrandbereich 5 vereinigen können. Auch hier entstehen entsprechend die Flachbahnen 1.3, 1.4 in zuverlässiger Art und Weise, sodass eine Konfusion von zwei Wickelvorrichtungen 71, 72 vermieden werden kann. Dabei kann die Trennvorrichtung 10 ferner die Quertrenneinheit 80 aufweisen, welche dazu ausgebildet ist, die Flachbahnen 1.3, 1.4 und/oder das schlauchförmige Flachmaterial 1 quer zur Transportrichtung 7 aufzutrennen, so dass die Flachbahnen 1.3, 1.4 erneut für die Wickelvorrichtungen 71, 72 eingerichtet werden können, so dass z.B. neue, ungenutzte Wickelrollen mit den Flachbahnen 1.3, 1.4 bestückbar sind.

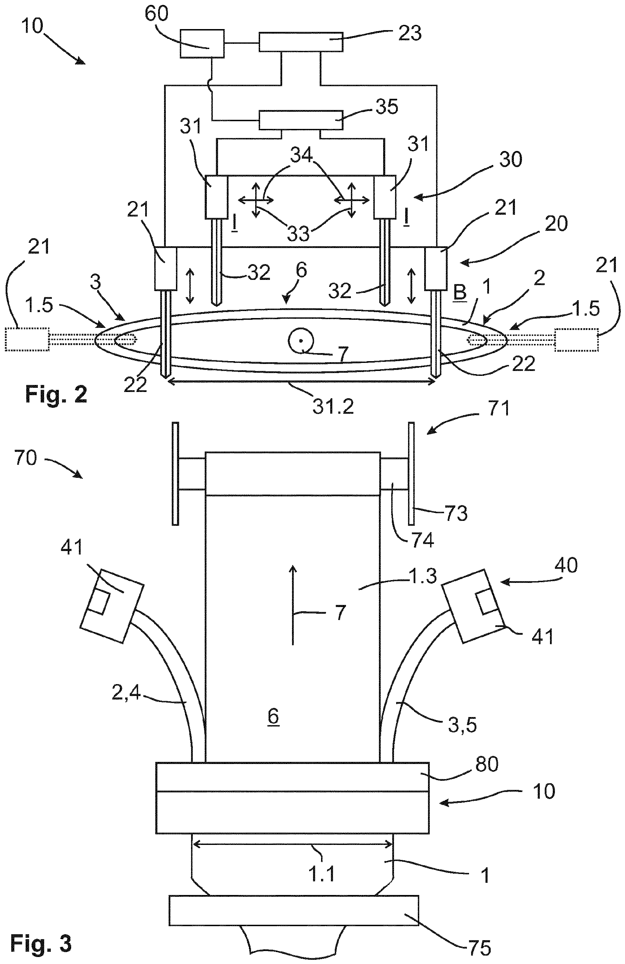

Figur 2 zeigt ferner die Trennvorrichtung 10 des ersten Ausführungsbeispiels in einer Frontansicht. Dabei wird das schlauchförmige Flachmaterial 1 entlang der Transportrichtung 7 (aus der Zeichnungsebene heraus) transportiert. Die Trennvorrichtung 10 ist zum Zeitpunkt t₁ der Figur 1 dargestellt und die Hilfstrenneinheit 30 befindet sich im Hilfsruhezustand I. Ferner sind die Hilfstrennmittel 31 der Hilfstrenneinheit 30 in Querrichtung des Flachmaterials 1 entsprechend der ersten Trennposition P positioniert. Die Längstrenneinheit 20 wiederum befindet sich im Haupttrennzustand B, sodass die Längstrennmittel 21 in das Flachmaterial 1 hineinragen. Dazu weisen die Längstrennmittel 21 ebenso wie die Hilfstrennmittel 31 Schneidelemente 22, 32 auf, welche dazu ausgebildet sind das Flachmaterial 1 stationär aufzutrennen. So sind die Schneidelemente 22, 32 vorzugsweise als mechanische Schneidelemente, insbesondere als Klingen, ausgebildet. Die Klingen sind dabei einseitig gelagert, sodass die Längstrenneinheit 20 z.B. oberhalb (als Volllinie dargestellt) oder seitlich (gestrichelt dargestellt) und die Hilfstrenneinheit 30 oberhalb des Flachmaterials 1 angeordnet sein können und auch eine erste Antriebseinheit 35 der Hilfstrenneinheit 30 und eine zweite Antriebseinheit 23 der Längstrenneinheit 20 einseitig des Flachmaterials 1 angeordnet sein können. Die Antriebseinheiten 23, 35 können vorzugsweise als pneumatische Antriebe vorgesehen sein, sodass diese zentral oder dezentral als jeweiliger Teil der Längstrenneinheit 20 bzw. der Hilfstrenneinheit 30 vorgesehen sein können. Die Antriebseinheiten 23, 35 können vorzugsweise ferner mit einer Steuereinheit 60 verbunden sein, sodass diese auf Grund von Signalen der Sensoreinheit 50 vorzugsweise automatisch einen Zustandswechsel der Längstrenneinheit 20 und/oder der Hilfstrenneinheit 30 bzw. einen Positionswechsel der Hilfstrenneinheit 30 bewirken kann. Aufgrund der Ausbildung mittels Schneidelementen 22, 32 können die Hilfstrenneinheit 30 im Hilfstrennzustand II und die Längstrenneinheit 20 im Haupttrennzustand B das schlauchförmige Flachmaterial 1 parallel zur Transportrichtung 7 des Flachmaterials 1 aufschneiden und dabei stationär verbleiben. Insbesondere kann es beispielsweise für bestimmte Anwendungsfälle vorgesehen sein, dass die Hilfstrenneinheit 30 lediglich ein Hilfstrennmittel 31 aufweist, so dass nur einer der Hilfstrennbereiche 4, 5 abtrennbar ist bzw. abgetrennt wird.

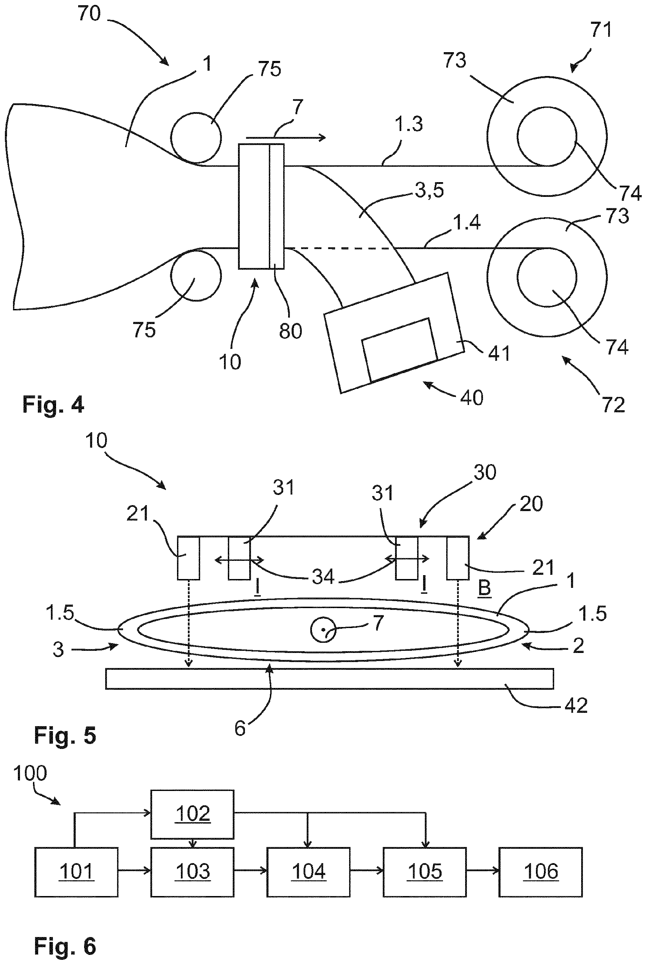

Die Figuren 3 und 4 zeigen ein System 70 mit einer erfindungsgemäßen Trennvorrichtung 10 in einem zweiten Ausführungsbeispiel, wobei Figur 3 das System 70 in schematischer Draufsicht und Figur 4 das System 70 in schematischer Seitenansicht zeigt. Dabei wird ein schlauchförmiges Flachmaterial 1 entlang einer Transportrichtung 7 bewegt, sodass dieses die Trennvorrichtung 10 passiert. Dabei ist die Trennvorrichtung 10 zumindest einem Führungsmittel 75, vorzugsweise zwei rollenförmigen Führungsmitteln 75, nachgeordnet. Durch das Führungsmittel 75 wird das schlauchförmige Flachmaterial 1 in zumindest einer Richtung gestaucht, so dass sich zwischen zwei Faltbereichen zwei im Wesentlichen parallele Bereiche ergeben, welche zu Flachbahnen 1.3, 1.4 verarbeitbar sind. Durch die Trennvorrichtung 10 wird das schlauchförmige Flachmaterial 1 dazu in zwei Flachbahnen 1.3, 1.4 aufgetrennt, wobei ein erster und ein zweiter Randbereich 2, 3 vom Flachmaterial 1 durch die Trennvorrichtung 10 getrennt werden. Sofern das schlauchförmige Flachmaterial 1 eine Ist-Schlauchbreite 1.1 aufweist, die größer oder gleich einer Soll-Schlauchbreite 1.2 ist. Ist die Ist-Schlauchbreite 1.1 kleiner als die Soll-Schlauchbreite 1.2, können entsprechend anstelle der Randbereiche 2, 3 ein erster Hilfsrandbereich 4 und ein zweiter Hilfsrandbereich 5 von einem Mittelbereich 6 des schlauchförmigen Fachmaterials 1 abgetrennt werden, sodass der Mittelbereich 6 anschließend die Flachbahnen 1.3, 1.4 bildet. Dadurch können die Flachbahnen 1.3, 1.4 getrennt voneinander auf jeweils eine Wickelvorrichtung 71, 72 aufgewickelt werden. Dazu weisen die erste und zweite Wickelvorrichtung 71, 72 jeweils einen Wickelhalter 73 auf, auf dem eine Wickelrolle 74 platzierbar ist, auf welcher wiederum jeweils eine der Flachbahnen 1.3, 1.4 aufwickelbar ist. Dabei wird deutlich, dass bei einem Zusammenhängen der Flachbahnen 1.3, 1.4, also beispielsweise bei einer Ist-Schlauchbreite 1.1, die kleiner ist als eine Soll-Schlauchbreite 1.2 ohne Auftrennen durch die Hilfstrenneinheit 30 der Trennvorrichtung 10, entsprechend eine Konfusion zwischen den Wickelvorrichtungen 71, 72 entstehen würde, da beide Wickelvorrichtungen 71, 72 versuchen würden, dass schlauchförmige Flachmaterial 1 auf der jeweiligen Wickelrolle 74 aufzuwickeln. Um beispielsweise einen Rollenwechsel der Wickelrollen 74 der Wickelvorrichtungen 71, 72 zu vereinfachen ist ferner eine Quertrenneinheit 80 vorgesehen, um hier ein einfaches Auftrennen der Flachbahnen 1.3, 1.4 zu ermöglichen. Um die Randbereiche 2, 3 bzw. die Hilfsrandbereiche 4, 5 aus dem Prozess abzuführen, kann ferner eine Aufnahmeeinheit 40 vorgesehen sein, welche von der Trennvorrichtung 10 baulich getrennt sein kann oder welche mit der Trennvorrichtung 10 verbunden sein kann. So kann die Aufnahmeeinheit 40 zumindest zwei Absaugmittel 41 umfassen, um an jeder Seite der Flachbahnen 1.3, 1.4 die Randbereiche 2, 3 bzw. die Hilfsrandbereiche 4, 5 aufzunehmen. Dabei kann das Absaugmittel 41 beispielsweise ein Gebläse aufweisen, welches die Randbereiche 2,3 bzw. die Hilfsrandbereiche 4, 5 aktiv absaugt. Die Aufnahmeeinheit 40 kann vorzugsweise dann entfallen, wenn Längstrennmittel 21 einer Längstrenneinheit 20 der Trennvorrichtung 10 als Seitenschlitzmesser zum Auftrennen der Randbereiche 2,3 ausgebildet sind.

Figur 5 zeigt ferner eine erfindungsgemäße Trennvorrichtung 10 in einem weiteren Ausführungsbeispiel. Insbesondere ist die Trennvorrichtung 10 im Wesentlichen entsprechend des ersten Ausführungsbeispiels ausgebildet. So weist die Trennvorrichtung 10 beispielsweise eine Längstrenneinheit 20 und eine Hilfstrenneinheit 30 auf. Die Hilfstrenneinheit 30 ist zum dargestellten Zeitpunkt deaktiviert und somit in einem Hilfsruhezustand I, während die Längstrenneinheit 20 aktiviert ist und sich somit in einem Haupttrennzustand B befindet. Anstatt Klingen aufzuweisen, senden Längstrennmittel 21 der Längstrenneinheit 30 des Ausführungsbeispiels der Figur 5 im Haupttrennzustand B einen Laserstrahl- oder einen Wasserstrahl aus, um Randbereiche 2, 3 des schlauchförmigen Flachmaterials abzutrennen. Dabei ist die Längstrenneinheit 30 stationär, da sich das schlauchförmige Flachmaterial 1 entlang einer Transportrichtung 7 durch die Trenneinheit 10 bewegt. Im Falle eines Schneidens durch Wasserstrahlschneiden kann ferner eine Ableitvorrichtung 42 vorgesehen sein, welche verbrauchtes Medium, wie das Wasser, abführen kann. Vorzugsweise ist die Ableitvorrichtung 42 dabei unterhalb des schlauchförmigen Flachmaterials 1 angeordnet. Die Hilfstrenneinheit 30 ist ferner im Hilfsruhezustand I derart vorgesehen, dass bei der Deaktivierung der Laser oder Wasserstrahl nicht aktiv ist bzw. schneidet, sodass Hilfstrennmittel 31 der Hilfstrenneinheit 30 das schlauchförmige Flachmaterial 1 nicht schneiden. Durch die Ausbildung ohne mechanisches Schneidelement ist es nicht notwendig, die Längstrennmittel 21 und/oder die Hilfstrennmittel 31 in Richtung des Flachmaterials 1 zu verstellen, sodass diese an fester Position ausgebildet sein können. Vorzugsweise können die Hilfstrennmittel 31 lediglich in einer Querrichtung zum Flachmaterial 1 bzw. zur Transportrichtung 7 des Flachmaterials 1, vorzugsweise in einer zweiten Ebene 34, verstellbar ausgebildet sein. Insbesondere können die Längstrenneinheit 20 und die Hilfstrenneinheit 30 auf einer Höhe vorgesehen sein.

Figur 6 zeigt ferner ein erfindungsgemäßes Trennverfahren 100 in schematischer Darstellung der Verfahrensschritte. Dabei ist zunächst gemäß einem Verfahrensschritt 101 ein Auftrennen oder Abtrennen eines ersten und eines zweiten Randbereiches 2, 3 eines schlauchförmigen Flachmaterials 1 vorgesehen. Dies kann vorzugsweise durch eine Längstrenneinheit 20 einer Trennvorrichtung 10 durchgeführt werden. Während des Trennverfahrens 100 erfolgt gemäß einem Verfahrensschritt 102 ein Überwachen einer Ist-Schlauchbreite 1.1 des Flachmaterials 1. Zusätzlich oder alternativ kann der Verfahrensschritt 102 ein Überwachen eines Trennstatus der Längstrenneinheit 20 umfassen. Dies kann vorzugsweise durch eine Sensorvorrichtung 50 der Trennvorrichtung 10 durchgeführt werden. Wird dabei festgestellt, dass die Ist-Schlauchbreite 1.1 kleiner ist als eine Soll-Schlauchbreite 1.2 des Flachmaterials 1, wird die Hilfstrenneinheit 30 gemäß einem Verfahrensschritt 103 von einem Hilfsruhezustand I in einen Hilfstrennzustand II überführt. Zusätzlich oder alternativ kann durch die Sensorvorrichtung 50 oder eine weitere Sensorvorrichtung festgestellt werden, dass das Auftrennen der Randbereiche 2,3 unterbrochen ist, so dass im Rahmen von Verfahrensschritt 103 die Hilfstrenneinheit 30 vom Hilfsruhezustand I in den Hilfstrennzustand II überführt wird. Daraufhin kann gemäß einem Verfahrensschritt 104 ein Abtrennen von Hilfsrandbereichen 4, 5 von einem Mittelbereich 6 des Flachmaterials 1 durch die Hilfstrenneinheit 12 im Hilfstrennzustand II erfolgen. Eine Vereinigung der Hilfsrandbereiche 4, 5 mit den jeweiligen Randbereichen 2, 3 kann beispielsweise durch eine Rissfortpflanzung geschehen, sodass die Hilfsrandbereiche 4, 5 nicht aktiv mit den Randbereichen 2, 3 vereinigt werden müssen. Vorzugsweise kann jedoch ferner ein Verfahrensschritt 105 vorgesehen sein, nach welchem Hilfstrennmittel 31 der Hilfstrenneinheit 30 von einer ersten Trennposition P in eine zweite Trennposition Q verstellt werden, wobei die Feststellung der Hilfstrennmittel 31 quer zu einer Transportrichtung 7 des Flachmaterials 1 erfolgt. Dadurch werden die Randbereiche 2, 3 mit den jeweiligen Hilfsrandbereichen 4, 5 zumindest teilweise oder vollständig vereinigt. Werden die Randbereiche 2, 3 mit den Hilfsrandbereichen 4, 5 nur teilweise vereinigt, kann die vollständige Vereinigung beispielsweise ebenfalls durch Rissfortpflanzung erfolgen. Daher ist es auch besonders vorteilhaft, wenn die Hilfstrenneinheit 30 erst dann in den Hilfsruhezustand I überführt wird, nachdem die Hilfstrennmittel 31 die zweite Trennposition Q erreicht haben. Somit können zumindest für einen kurzen Zeitpunkt die Hilfstrennmittel 31 und die Längstrennmittel 21 parallel und nah beieinander das Flachmaterial 1 auftrennen, sodass die Schnitte entweder ineinander übergehen oder durch Rissfortpflanzung vereinigt werden.

Um einen Wechsel einer Wickelrolle 74 einer Wickelvorrichtung 71, 72 zu vereinfachen kann ferner eine Quertrenneinheit 80 vorgesehen sein, die beispielsweise mittels eines in Querrichtung zur Transportrichtung 7 des Flachmaterials 1 verstellbaren Messers Flachbahnen 1.3, 1.4 bzw. das schlauchförmige Flachmaterial 1 gemäß einem Verfahrensschritt 106 auftrennen kann.

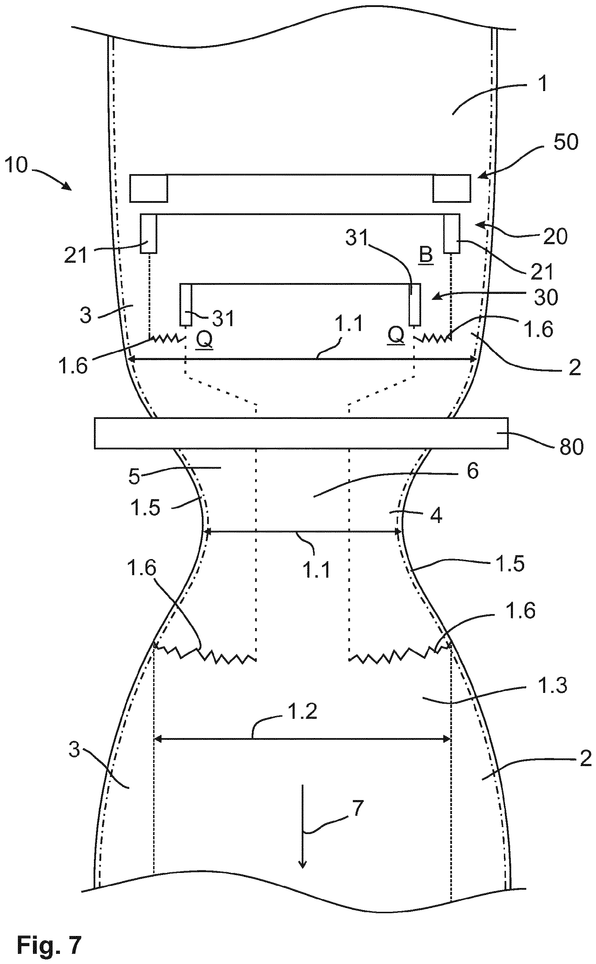

Figur 7 zeigt ferner eine erfindungsgemäße Trennvorrichtung 10 an einem Flachmaterial 1 mit einer Transportrichtung 7. Dabei ist das Flachmaterial 1 schlauchförmig ausgebildet und weist daher an den Seiten einen Faltbereich 1.5 auf, an welchem das Flachmaterial 1 umgeschlagen ist. Der Faltbereich 1.5 kann dabei eine scharfkantige Faltung aufweisen oder eine weiche Rundung. Dabei ist ferner gezeigt, dass das schlauchförmige Flachmaterial 1 im unteren Bereich in Flachbahnen 1.3, 1.4 aufgeteilt ist, indem durch eine Längstrenneinheit 20 der Trennvorrichtung 10 ein Schnitt eingebracht ist, sodass ein erster Randbereich 2 und ein zweiter Randbereich 3 entstehen, die den Faltbereich 1.5 beinhalten, sodass zwischen dem ersten und zweiten Randbereich 2, 3 die Flachbahnen 1.3, 1.4 entstehen. Das Flachmaterial 1 weist dabei ferner einen Bereich auf, in welchem eine Ist-Schlauchbreite 1.1 kleiner ist als eine Soll-Schlauchbreite 1.2 des Flachmaterials 1, sodass in diesem Bereich eine Hilfstrenneinheit 30 zwei Hilfsrandbereiche 4, 5 eingebracht hat. Dazu hat die Hilfstrenneinheit 30 mittels zwei Hilfstrennmitteln 31 jeweils einen Schnitt eingebracht. Da der erste Hilfsrandbereich 4 und der zweite Hilfsrandbereich 5 jedoch im unteren Bereich noch mit den Flachbahnen 1.3, 1.4 zusammenhängen, ist hier ferner beidseitig jeweils ein Riss 1.6 entstanden, welcher dafür sorgt, dass auch im Bereich einer kleineren Ist-Schlauchbreite die Hilfsrandbereiche 4, 5 von einem Mittelbereich 6 vereinzelbar sind. Im oberen Bereich wird die Vereinigung der Hilfsrandbereiche 4, 5 mit den Randbereichen 2, 3 ferner dadurch unterstützt, dass Hilfstrennmittel 31 quer zur Transportrichtung 7 des Flachmaterials 1 verstellbar ausgebildet sind, sodass diese in Richtung der jeweiligen Längstrennmittel 21 zwischen einer ersten Trennposition P und einer zweiten Trennposition Q verstellbar sind. Im hier dargestellten Ausführungsbeispiel liegt die zweite Trennposition Q der Hilfstrennmittel 31 weiter von dem Faltbereich 1.5 des schlauchförmigen Flachmaterials 1 entfernt, als die Position von Längstrennmitteln 21. Dabei ist jedoch auch hier eine Rissbildung unterstützt, sodass ein Riss 1.6 den oberen ersten Randbereich 2 mit dem ersten Hilfsrandbereich 4 und den oberen zweiten Randbereich 3 mit dem zweiten Hilfsrandbereich 5 vereinigen kann. Dadurch kann insgesamt kontinuierlich dafür gesorgt werden, dass zwei Flachbahnen 1.3, 1.4 entstehen, ohne dass eine Konfusion von der Trennvorrichtung 10 nachgeordneten Wickelvorrichtungen 71, 72 entsteht.

Wie in Figur 2 (gestrichelt) dargestellt, kann die Längstrenneinheit 20, insbesondere in den vorangegangenen Ausführungsbeispielen, dazu ausgebildet sein, die Randbereiche 2,3 des Flachmaterials 1 aufzutrennen und insbesondere nicht abzutrennen. Dabei können die Längstrennmittel 21 der Längstrenneinheit 20 seitlich des Flachmaterials 1 angeordnet sein und beispielsweise als Seitenschlitzmesser ausgebildet sein. Somit wird ein Aufschneiden des Faltungsbereiches 1.5 bewirkt, so dass zwei Flachbahnen 1.3, 1.4 entstehen, ohne dass die Randbereiche 2, 3 durch die Längstrenneinheit 20 abgetrennt werden.

Ferner ist es bei den voranstehenden Ausführungsformen denkbar, dass lediglich ein Hilfsrandbereich 4, 5 durch die Hilfstrenneinheit 30 abtrennbar ist bzw. abgetrennt wird. Insbesondere kann es beispielsweise im Falle eines Fehlers beim Auf- bzw. Abtrennens der Randbereiche 2, 3 ausreichend sein, einen Hilfsrandbereich 4, 5 abzutrennen, wenn z.B. auf der gegenüberliegenden Seite der Randbereich 3, 2 fehlerfrei auf- bzw. abgetrennt wird oder aufgrund einer Materialeigenschaft des Flachmaterials 1 von selbst aufreißt, wenn der eine Hilfsrandbereich 4, 5 abgetrennt wird. Somit kann ferner vorgesehen sein, dass die Hilfstrenneinheit 30 lediglich ein Hilfstrennmittel 31 umfasst.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden ohne den Rahmen der vorliegenden Erfindung zu verlassen.

### Bezugszeichenliste

- 1: Flachmaterial
- 1.1: Ist-Schlauchbreite
- 1.2: Soll-Schlauchbreite
- 1.3: erste Flachbahn
- 1.4: zweite Flachbahn
- 1.5: Faltbereich
- 1.6: Riss
- 2: erster Randbereich
- 2.1: Randbreite
- 3: zweiter Randbereich
- 4: erster Hilfsrandbereich
- 5: zweiter Hilfsrandbereich
- 6: Mittelbereich
- 7: Transportrichtung

- 10: Trennvorrichtung

- 20: Längstrenneinheit
- 21: Längstrennmittel
- 22: Schneidelement
- 23: zweite Antriebseinheit
- 24: Trennrichtung
- 30: Hilfstrenneinheit
- 31: Hilfstrennmittel
- 31.1: Wirkabstand
- 31.2: Wirkabstand
- 32: Schneidelement
- 33: erste Ebene
- 34: zweite Ebene
- 35: erste Antriebseinheit
- 36: Trennrichtung
- 40: Aufnahmeeinheit
- 41: Absaugmittel
- 42: Ableitvorrichtung

- 50: Sensoreinheit
- 60: Steuereinheit

- 70: System
- 71: erste Wickelvorrichtung
- 72: zweite Wickelvorrichtung
- 73: Wickelhalter
- 74: Wickelrolle
- 75: Führungsmittel

- 80: Quertrenneinheit

- 100: Verfahren
- 101: Verfahrensschritt
- 102: Verfahrensschritt
- 103: Verfahrensschritt
- 104: Verfahrensschritt
- 105: Verfahrensschritt
- 106: Verfahrensschritt

- A: Hauptruhezustand
- B: Haupttrennzustand
- P: erste Trennposition
- Q: zweite Trennposition
- I: Hilfsruhezustand
- II: Hilfstrennzustand

- tₙ: Prozesszeitpunkt

## Patentansprüche

1. Trennvorrichtung (10) für das Auftrennen eines schlauchförmigen, eine Ist-Schlauchbreite (1.1) aufweisenden Flachmaterials (1), mit
zumindest einer Längstrenneinheit (20) zum Auftrennen oder Abtrennen eines ersten Randbereiches (2) und eines zweiten Randbereiches (3) des Flachmaterials (1),
**dadurch gekennzeichnet,**
**dass** eine Hilfstrenneinheit (30) vorgesehen ist, welche von einem Hilfsruhezustand (I) in einen Hilfstrennzustand (II) bringbar ist, wobei die Hilfstrenneinheit (30) im Hilfsruhezustand (I) deaktiviert ist und im Hilfstrennzustand (II) aktiviert ist, so dass im Hilfstrennzustand (II) ein erster und/oder ein zweiter Hilfsrandbereich (4, 5) von einem Mittelbereich (6) des Flachmaterials (1) abtrennbar ist.

2. Trennvorrichtung (10) nach Anspruch 1,
**dadurch gekennzeichnet,**
**dass** die Hilfstrenneinheit (30) vom Hilfsruhezustand (I) in den Hilfstrennzustand (II) bringbar ist, wenn die Ist-Schlauchbreite (1.1) kleiner ist als eine Soll-Schlauchbreite (1.2) und/oder wenn das Auftrennen der Randbereiche (2, 3) unterbrochen ist, wobei insbesonderedie Längstrenneinheit (20) zumindest zwei Längstrennmittel (21) aufweist und/oder dass die Hilfstrenneinheit (30) zumindest zwei Hilfstrennmittel (31) aufweist, wobei die Längstrennmittel (21) und/oder die Hilfstrennmittel (31) dazu ausgebildet sind, das Flachmaterial (1) parallel zu einer Transportrichtung (7) des Flachmaterials (1) aufzutrennen.

3. Trennvorrichtung (10) nach Anspruch 2,
**dadurch gekennzeichnet,**
**dass** die Längstrennmittel (21) und/oder die Hilfstrennmittel (31) zum stationären Auftrennen des Flachmaterials (1) ausgebildet sind.

4. Trennvorrichtung (10) nach Anspruch 3,
**dadurch gekennzeichnet,**
**dass** die Längstrennmittel (21) und/oder die Hilfstrennmittel (31) jeweils ein einseitig gelagertes, insbesondere mechanisches, Schneidelement (22, 32) umfassen.

5. Trennvorrichtung (10) nach einem der vorhergehenden Ansprüche,
**dadurch gekennzeichnet,**
**dass** die Hilfstrennmittel (31) zwischen einer ersten Trennposition (P) und einer zweiten Trennposition (Q), insbesondere zumindest im Wesentlichen quer zu der Transportrichtung (7) des Flachmaterials (1), verstellbar sind **wobei insbesondere** die Hilfstrennmittel (31) jeweils in zumindest zwei Ebenen (33, 34) beweglich ausgestaltet sind, wobei das Überführen vom Hilfsruhezustand (I) in den Hilfstrennzustand (II) durch eine Bewegung der Hilfstrennmittel (31) in jeweils einer ersten Ebene (33) durchführbar ist und die Hilfstrennmittel (31) zwischen der ersten Trennposition (P) und der zweiten Trennposition (Q) in jeweils einer zweiten Ebene (34) verstellbar sind und wobei insbesondere die Hilfstrennmittel (31) in der ersten Trennposition (P) einen Wirkabstand (31.1) zueinander aufweisen, der geringer ist, als der Wirkabstand (31.1) zueinander in der zweiten Trennposition (Q), insbesondere wobei ein Wirkabstand (31.2) der Längstrennmittel (21) zueinander und der Wirkabstand (31.1) der Hilfstrennmittel (31) zueinander zumindest im Wesentlichen gleich ist, wenn sich die Hilfstrennmittel (31) in der zweiten Trennposition (Q) befinden und/oder dass die Längstrennmittel (21) derart positioniert sind, dass die Randbereiche (2, 3) jeweils eine Randbreite (2.1) von bis zu 500 mm, bevorzugt 10 mm bis 70 mm, besonders bevorzugt 20 mm bis 50 mm, aufweisen.

6. Trennvorrichtung (10) nach einem der vorhergehenden Ansprüche,
**dadurch gekennzeichnet,**
**dass** eine Trennrichtung (36) der Hilfstrenneinheit (30) in der ersten und zweiten Trennposition (P, Q) parallel zu einer Trennrichtung (24) der Längstrenneinheit (20) orientiert ist, insbesondere wobei die Hilfstrennmittel (31) derart ausgebildet sind, dass die Trennrichtung (36) der Hilfstrenneinheit (30) auch bei Verstellung der Hilfstrennmittel (31) von der ersten in die zweite Trennposition (P, Q) parallel zur Trennrichtung (24) der Längstrenneinheit (20) ist.

7. Trennvorrichtung (10) nach einem der vorhergehenden Ansprüche,
**dadurch gekennzeichnet,**
**dass** die Längstrenneinheit (20) von einen Hauptruhezustand (A), in welchem die Längstrenneinheit (20) deaktiviert ist, in einen Haupttrennzustand (B), in welchem die Randbereiche (2, 3) durch die Längstrenneinheit (20) auftrennbar oder abtrennbar sind, insbesondere instantan oder innerhalb von 30 Sekunden, bringbar ist.

8. Trennvorrichtung (10) nach einem der vorhergehenden Ansprüche,
**dadurch gekennzeichnet,**
**dass** eine Aufnahmeeinheit (40) vorgesehen ist, durch welche die Randbereiche (2, 3) und/oder die Hilfsrandbereiche (4, 5) aufnehmbar sind und/oder dass die Aufnahmeeinheit (40) zumindest ein Absaugmittel (41) umfasst, durch welches die Randbereiche (2, 3) und/oder die Hilfsrandbereiche (4, 5), insbesondere aktiv, abführbar sind.

9. Trennvorrichtung (10) nach einem der vorhergehenden Ansprüche,
**dadurch gekennzeichnet,**
**dass** eine, insbesondere optische, Sensoreinheit (50) vorgesehen ist, durch welche eine Abweichung der Ist-Schlauchbreite (1.1) von der Soll-Schlauchbreite (1.2) des Flachmaterials (1) erkennbar ist, wobei insbesondere dass die Längstrenneinheit (20) und/oder die Hilfstrenneinheit (30) der Sensoreinheit (50) in Bezug auf eine Transportrichtung (7) des Flachmaterials (1) nachgeordnet ist.

10. Trennvorrichtung (10) nach Anspruch 9,
**dadurch gekennzeichnet,**
**dass** eine Steuereinheit (60) mit der Sensoreinheit (50) und einer ersten Antriebseinheit (35) zum Antrieb zumindest eines der Hilfstrennmittel (31) und/oder einer zweiten Antriebseinheit (23) zum Antrieb zumindest eines der Längstrennmittel (21) in Kommunikationsverbindung steht, insbesondere so dass ein Überführen der Hilfstrenneinheit (30) vom Hilfsruhezustand (I) in den Hilfstrennzustand (II) und/oder der Längstrenneinheit (20) vom Hauptruhezustand (A) in den Haupttrennzustand (B) automatisch durchführbar ist.

11. Trennvorrichtung (10) nach einem der vorhergehenden Ansprüche,
**dadurch gekennzeichnet,**
**dass** die Hilfstrenneinheit (30) dazu ausgebildet ist, instantan oder innerhalb von 30 Sekunden, bevorzugt innerhalb von 5 Sekunden, vom Hilfsruhezustand (I) in den Hilfstrennzustand (II) gebracht zu werden und/oder dass eine Quertrenneinheit (80) vorgesehen ist, welche dazu ausgebildet ist, das Flachmaterial (1) zumindest abschnittsweise, insbesondere senkrecht zu einer Transportrichtung (7) des Flachmaterials (1), zu durchtrennen.

12. Trennvorrichtung (10) nach einem der vorhergehenden Ansprüche,
**dadurch gekennzeichnet,**
**dass** eine Positionierung der Hilfstrenneinheit (30) an eine Positionierung der Längstrenneinheit (20) zumindest teilweise gekoppelt ist.

13. System (70) mit einer Trennvorrichtung (10) nach einem der vorhergehenden Ansprüche zum Auftrennen eines schlauchförmigen Flachmaterials (1) in zumindest zwei Flachbahnen (1.3, 1.4),
wobei in einer Transportrichtung (7) des Flachmaterials (1) der Trennvorrichtung (10) zumindest eine erste Wickelvorrichtung (71) und eine zweite Wickelvorrichtung (72) nachgeordnet ist, so dass durch die Wickelvorrichtungen (71, 72) jeweils zumindest eine der Flachbahnen (1.3, 1.4) auf einer Wickelrolle (74), welche auf einem Wickelhalter (73) der Wickelvorrichtungen (71, 72) montierbar ist, aufwickelbar ist,
insbesondere wobei eine Aufnahmeeinheit (40) vorgesehen ist, durch welche Randbereiche (2, 3), vorzugsweise welche durch die Trennvorrichtung (10) von einem Mittelbereich (6) des Flachmaterials (1) abtrennbar sind, absaugbar sind, und/oder durch welche zumindest ein Hilfsrandbereich (4, 5), welcher durch die Trennvorrichtung (10) von einem Mittelbereich (6) des Flachmaterials (1) abtrennbar ist, absaugbar ist.

14. Trennverfahren (100) zum Auftrennen eines schlauchförmigen Flachmaterials (1), umfassend folgende Schritte:
- Auftrennen oder Abtrennen eines ersten und eines zweiten Randbereiches (2, 3) des Flachmaterials (1),
- Überführen einer Hilfstrenneinheit (30) einer Trennvorrichtung (10), insbesondere nach einem der Ansprüche 1 bis 13, von einem Hilfsruhezustand (I) in einen Hilfstrennzustand (II),
- Abtrennen von zumindest einem Hilfsrandbereich (4, 5), vorzugsweise von zumindest zwei Hilfsrandbereichen (4, 5), von einem Mittelbereich (6) des Flachmaterials (1) durch die Hilfstrenneinheit (30) im Hilfstrennzustand (II).

15. Trennverfahren (100) nach Anspruch 14,
**dadurch gekennzeichnet,**
**dass** das Trennverfahren (100) folgenden Schritt umfasst:
- Überwachen einer Ist-Schlauchbreite (1.1) des Flachmaterials (1) und/oder Überwachen eines Trennstatus einer Längstrenneinheit (20) der Trennvorrichtung (10),
wobei das Überführen der Hilfstrenneinheit (30) vom Hilfsruhezustand (I) in den Hilfstrennzustand (II) durchgeführt wird, wenn die Ist-Schlauchbreite (1.1) kleiner ist als eine Soll-Schlauchbreite (1.2) und/oder das Auftrennen der Randbereiche (2, 3) des Flachmaterials (1) unterbrochen ist.

16. Trennverfahren (100) nach Anspruch 14 oder 15,
**dadurch gekennzeichnet,**
**dass** weiterhin folgender Schritt vorgesehen ist:
- Verstellen von Hilfstrennmitteln (31) der Hilfstrenneinheit (30) von einer ersten Trennposition (P) in eine zweite Trennposition (Q), insbesondere quer zu einer Transportrichtung (7) des Flachmaterials (1), insbesondere wobei die Hilfstrenneinheit (30) in den Hilfsruhezustand (I) überführt wird, nachdem die Hilfstrennmittel (31) die zweite Trennposition (Q) erreicht haben.

17. Trennverfahren (100) nach einem der Ansprüche 14 bis 16, **dadurch gekennzeichnet,**
**dass** die Randbereiche (2, 3) und/oder die Hilfsrandbereiche (4, 5), insbesondere aktiv, separat abgeführt werden und/oder dass das Überwachen der Ist-Schlauchbreite (1.1) des Flachmaterials (1) ein Auswerten von Sensorsignalen umfasst, insbesondere wobei die Ist-Schlauchbreite (1.1) optisch überwacht wird.

18. Trennverfahren (100) nach einem der Ansprüche 14 bis 17, **dadurch gekennzeichnet,**
**dass** das Überführen der Hilfstrenneinheit (30) vom Hilfsruhezustand (I) in den Hilfstrennzustand (II) automatisch erfolgt und/oder
**dass** sich das Flachmaterial (1) zumindest beim Auftrennen des Flachmaterials (1), insbesondere während des gesamten Trennverfahrens (100), relativ zur Trennvorrichtung (10) bewegt und/oderdass weiterhin folgender Schritt vorgesehen ist:
- Zumindest abschnittsweises Durchtrennen des Flachmaterials (1), insbesondere senkrecht zu einer Transportrichtung (7) des Flachmaterials (1).

## Claims

1. A separating device (10) for separating a tubular, flat material (1) having an actual tube width (1.1), comprising at least one longitudinal separating unit (20) for separating or removing a first edge region (2) and a second edge region (3) of the flat material (1),
**characterized in**
**that** an auxiliary separating unit (30) is provided, which can be brought from an auxiliary rest state (I) into an auxiliary separating state (II), wherein the auxiliary separating unit (30) is deactivated in the auxiliary rest state (I) and is activated in the auxiliary separating state (II), so that in the auxiliary separating state (II) a first and/or a second auxiliary edge region (4, 5) can be removed from a central region (6) of the flat material (1).

2. The separating device (10) according to claim 1,
**characterized in**
**that** the auxiliary separating unit (30) can be brought from the auxiliary rest state (I) into the auxiliary separating state (II), if the actual tube width (1.1) is smaller than the target tube width (1.2) and/or if the separating of the edge regions (2, 3) is interrupted, wherein, in particular, the longitudinal separating unit (20) has at least two longitudinal separating means (21) and/or that the auxiliary separating unit (30) has at least two auxiliary separating means (31), wherein the longitudinal separating means (21) and/or the auxiliary separating means (31) is designed to separate the flat material (1) parallel to a transport direction (7) of the flat material (1).

3. The separating device (10) according to claim 2,
**characterized in**
**that** the longitudinal separating means (21) and/or the auxiliary separating means (31) are designed for the stationary separation of the flat material (1).

4. The separating device (10) according to claim 3,
**characterized in**
**that** the longitudinal separating means (21) and/or the auxiliary separating means (31) in each case comprise a cutting element (22, 32) mounted on one side, in particular, a mechanical cutting element.

5. The separating device (10) according to any one of the preceding claims,
**characterized in**
**that** the auxiliary separating means (31) can be adjusted between a first separating position (P) and a second separating position (Q), in particular, at least substantially transverse to the transport direction (7) of the flat material (1), **wherein, in particular,** the auxiliary separating means (31) in each case are designed so as to be movable in at least two planes (33, 34), wherein the transfer from the auxiliary rest state (I) into the auxiliary separating state (II) can be carried out by a movement of the auxiliary separating means (31) in in each case a first plane (33) and the auxiliary separating means (31) can be adjusted between the first separating position (P) and the second separating position (Q) in in each case a second plane (34), and wherein, in particular, the auxiliary separating means (31) have an effective distance (31.1) from each other in the first separating position (P), which is smaller than the effective distance (31.1) from each other in the second separating position (Q), in particular, wherein an effective distance (31.2) of the longitudinal separating means (21) from each other and the effective distance (31.1) of the auxiliary separating means (31) from each other is at least substantially the same, when the auxiliary separating means (31) are located in the second separating position (Q) and/or that the longitudinal separating means (21) are positioned in such a manner that the edge regions (2, 3) in each case have an edge width (2.1) of up to 500 mm, preferably 10 mm to 70 mm, particularly preferably 20 mm to 50 mm.

6. The separating device (10) according to any one of the preceding claims,
**characterized in**
**that** a separation direction (36) of the auxiliary separating unit (30) in the first and second separating position (P, Q) is oriented parallel to a separation direction (24) of the longitudinal separating unit (20), in particular, wherein the auxiliary separating means (31) is designed in such a manner that the separation direction (36) of the auxiliary separating unit (30) is also parallel to the separation direction (24) of the longitudinal separating unit (20) when the auxiliary separating means (31) are adjusted from the first into the second separating position (P, Q).

7. The separating device (10) according to any one of the preceding claims,
**characterized in**
**that** the longitudinal separating unit (20) can be brought from a main rest position (A), in which the longitudinal separating unit (20) is deactivated, into a main separating state (B), in which the edge regions (2, 3) can be separated or removed by the longitudinal separating unit (20), in particular, instantaneously or within 30 seconds.

8. The separating device (10) according to any one of the preceding claims,
**characterized in**
**that** a receiving unit (40) is provided, by means of which the edge regions (2, 3) and/or the auxiliary edge regions (4, 5) can be received and/or that the receiving unit (40) comprises at least one suction means (41), by means of which the edge regions (2, 3) and/or the auxiliary edge regions (4, 5) can be, in particular, actively carried away.

9. The separating device (10) according to any one of the preceding claims,
**characterized in**
**that**, in particular, an optical, sensor unit (50) is provided, by means of which a deviation of the actual tube width (1.1) from the target tube width (1.2) of the flat material (1) can be detected, wherein, in particular, that the longitudinal separating unit (20) and/or the auxiliary separating unit (30) is arranged downstream of the sensor unit (50) in respect to a transport direction (7) of the flat material (1).

10. The separating device (10) according to claim 9,
**characterized in**
**that** a control unit (60) is connected communicatively with the sensor unit (50) and a first drive unit (35) for driving at least one of the auxiliary separating means (31) and/or a second drive unit (23) for driving at least one of the longitudinal separating means (21), in particular, so that a transfer of the auxiliary unit (30) from the auxiliary rest state (I) into the auxiliary separating state (II) and/or of the longitudinal separating unit (20) from the main rest state (A) into the main separating state (B) can be carried out automatically.

11. The separating device (10) according to any one of the preceding claims,
**characterized in**
**that** the auxiliary separating unit (30) is designed to be brought from the auxiliary rest state (I) into the auxiliary separating state (II) instantaneously or within 30 seconds, preferably within 5 seconds and/or that a transverse separating unit (80) is provided, which is designed to cut through the flat material (1) at least in sections, in particular, perpendicular to a transport direction (7) of the flat material (1).

12. The separating device (10) according to any one of the preceding claims,
**characterized in**
**that** a positioning of the auxiliary separating unit (30) is at least partially coupled to a positioning of the longitudinal separating unit (20).

13. A system (70) having a separating device (10) according to any one of the preceding claims, for separating a tubular flat material (1) into at least two flat webs (1.3, 1.4),
wherein at least one first winding device (71) and a second winding device (72) is arranged downstream of the separating device (10) in a transport direction (7) of the flat material (1), so that in each case at least one of the flat webs (1.3, 1.4) can be wound up by the winding devices (71, 72) on a winding roller (74), which can be mounted on a winding holder (73) of the winding devices (71, 72),
in particular, wherein a receiving unit (40) is provided, by means of which edge regions (2, 3), preferably which can be removed by the separating device (10) from a central region (6) of the flat material (1), can suctioned off, and/or by means of which at least one auxiliary edge region (4, 5), which can be removed by the separating device (10) from a central region (6) of the flat material (1), can be suctioned off.

14. A separating method (100) for separating a tubular flat material (1), comprising the following steps:
- Separation or removal of a first and a second edge region (2, 3) of the flat material (1),
- Transfer of an auxiliary unit (30) of a separating device (10), in particular, according to any one of claims 1 to 13, from an auxiliary rest state (I) into an auxiliary separating state (II),
- Removal of at least one auxiliary edge region (4, 5), preferably of at least two auxiliary edge regions (4, 5), from the central region (6) of the flat material (1) by means of the auxiliary separating unit (30) in the auxiliary separating state (II).

15. The separating method (100) according to claim 14,
**characterized in**
**that** the separating method (100) comprises the following step:
- Monitoring of an actual tube width (1.1) of the flat material (1) and/or monitoring of a separation status of a longitudinal separating unit (20) of the separating device (10),
wherein the transfer of the auxiliary separating unit (30) from the auxiliary rest state (I) into the auxiliary separating state (II) is carried out, when the actual tube width (1.1) is smaller than a target tube width (1.2) and/or the separation of the edge regions (2, 3) of the flat material (1) is interrupted.

16. The separating method (100) according to claim 14 or 15,
**characterized in**
**that** the following step is also provided:
- Adjustment of the auxiliary separating means (31) of the auxiliary separating unit (30) from a first separating position (P) into a second separating position (Q), in particular, transverse to a transport direction (7) of the flat material (1), in particular, wherein the auxiliary separating unit (30) is transferred into the auxiliary rest state (I), after the auxiliary separating means (31) have reached the second separating position (Q).

17. The separating method (100) according to any one of claims 14 to 16,
**characterized in**
**that** the edge regions (2, 3) and/or the auxiliary edge regions (4, 5) are, in particular, actively, separately carried away and/or that the monitoring of the actual tube width (1.1) of the flat material (1) comprises an evaluation of sensor signals, in particular, wherein the actual tube width (1.1) is optically monitored.

18. The separating method (100) according to any one of claims 14 to 17,
**characterized in**
**that** the transfer of the auxiliary separating unit (30) from the auxiliary rest state (I) into the auxiliary separating state (II) takes place automatically and/or
**that** the flat material (1) moves relative to the separating device (10) at least when the flat material (1) is separated, in particular, during the entire separating method (100) and/or that the following step is also provided:
- Cutting through the flat material (1) at least in sections, in particular, perpendicular to a transport direction (7) of the flat material (1).

## Revendications

1. Dispositif de sectionnement (10) pour le sectionnement d'un matériau plat (1) en forme de gaine présentant une largeur de gaine réelle (1.1), avec
au moins une unité de sectionnement longitudinale (20) pour le sectionnement ou la séparation d'une première partie de bord (2) et d'une deuxième partie de bord (3) du matériau plat (1),
**caractérisé en ce que**
une unité de sectionnement auxiliaire (30) est prévue, qui peut être amenée d'un état de repos auxiliaire (I) vers un état de sectionnement auxiliaire (II), dans lequel l'unité de sectionnement auxiliaire (30) est désactivée dans l'état de repos auxiliaire (I) et est activée dans l'état de sectionnement auxiliaire (II), de façon à ce que, dans l'état de sectionnement auxiliaire (II), une première et/ou une deuxième partie de bord auxiliaire (4, 5) peut être séparée d'une partie centrale (6) du matériau plat (1).

2. Dispositif de sectionnement (10) selon la revendication 1,
**caractérisé en ce que**
l'unité de sectionnement auxiliaire (30) peut être amenée de l'état de sectionnement auxiliaire (I) vers l'état de repos auxiliaire (II) lorsque la largeur de gaine réelle (1.1) est inférieure à une largeur de gaine de consigne (1.2) et/ou lorsque le sectionnement des parties de bord (2, 3) est interrompu, dans lequel, plus particulièrement, l'unité de sectionnement longitudinale (20) comprend au moins deux moyens de sectionnement longitudinaux (21) et/ou **en ce que** l'unité de sectionnement auxiliaire (30) comprend au moins deux moyens de sectionnement auxiliaires (31), dans lequel les moyens de sectionnement longitudinaux (21) et/ou les moyens de sectionnement auxiliaires (31) sont conçu pour sectionner le matériau plat (1) parallèlement à une direction de transport (7) du matériau plat (1).

3. Dispositif de sectionnement (10) selon la revendication 2,
**caractérisé en ce que**
les moyens de sectionnement longitudinaux (21) et/ou les moyens de sectionnement auxiliaires (31) sont conçus pour le sectionnement stationnaire du matériau plat (1).

4. Dispositif de sectionnement (10) selon la revendication 3,
**caractérisé en ce que**
les moyens de sectionnement longitudinaux (21) et/ou les moyens de sectionnement auxiliaires (31) comprennent chacun un élément de coupe (22, 32), plus particulièrement mécanique, logé de manière unilatérale.

5. Dispositif de sectionnement (10) selon l'une des revendications précédentes,
**caractérisé en ce que**
les moyens de sectionnement auxiliaires (31) peuvent être réglés entre une première position de sectionnement (P) et une deuxième position de sectionnement (Q), plus particulièrement globalement transversalement par rapport à la direction de transport (7) du matériau plat (1), dans lequel, plus particulièrement,
les moyens de sectionnement auxiliaires (31) sont conçus chacun de manière mobile dans au moins deux plans (33, 34), dans lequel le passage de l'état de repos auxiliaire (I) vers l'état de sectionnement auxiliaire (II) peut être effectué à l'aide d'un mouvement des moyens de sectionnement auxiliaires (31) chacun dans un premier plan (33) et les moyens de sectionnement auxiliaires (31) peuvent être réglés entre la première position de sectionnement (P) et la deuxième position de sectionnement (Q) chacun dans un deuxième plan (34) et dans lequel, plus particulièrement,
les moyens de sectionnement auxiliaires (31) présentent, l'un par rapport à l'autre, dans la première position de sectionnement (P), une distance effective (31.1) qui est inférieure à la distance effective (31.1) entre eux dans la deuxième position de sectionnement (Q), plus particulièrement dans lequel une distance effective (31.2) des moyens de sectionnement longitudinaux (21) entre eux et la distance effective (31.1) des moyens de sectionnement auxiliaires (31) entre eux, sont au moins globalement égales lorsque les moyens de sectionnement auxiliaires (31) se trouvent dans la deuxième position de sectionnel (Q) et/ou **en ce que** les moyens de sectionnement longitudinaux (21) sont positionnés de façon à ce que les parties de bord (2, 3) présentent chacune une largeur de bord (2.1) jusqu'à 500 mm, de préférence de 10 mm à 70 mm, plus particulièrement de préférence de 20 mm à 50 mm.

6. Dispositif de sectionnement (10) selon l'une des revendications précédentes,
**caractérisé en ce que**
une direction de sectionnement (36) de l'unité de sectionnement auxiliaire (30) dans les première et deuxième positions de sectionnement (P, Q), est orientée parallèlement à une direction de sectionnement (24) de l'unité de sectionnement longitudinale (20), plus particulièrement dans lequel les moyens de sectionnement auxiliaires (31) sont conçus de façon à ce que la direction de sectionnement (36) de l'unité de sectionnement auxiliaire (30) soit parallèle à la direction de sectionnement (24) de l'unité de sectionnement longitudinale (20) même lors du déplacement des moyens de sectionnement auxiliaires (31) de la première vers la deuxième position de sectionnement (P, Q).

7. Dispositif de sectionnement (10) selon l'une des revendications précédentes,
**caractérisé en ce que**
l'unité de sectionnement longitudinale (20) peut être amenée d'un état de repos principal (A), dans lequel l'unité de sectionnement longitudinale (20) est désactivée, vers un état de sectionnement principal (B), dans lequel les parties de bord (2, 3) peuvent être sectionnés ou séparés par l'unité de sectionnement longitudinale (20), plus particulièrement de manière instantanée ou dans un délai de 30 secondes.

8. Dispositif de sectionnement (10) selon l'une des revendications précédentes,
**caractérisé en ce que**
une unité de logement (40) est prévue, à l'aide de laquelle les parties de bord (2, 3) et/ou les parties de bord auxiliaires (4, 5) peuvent être logés et/ou **en ce que** l'unité de logement (40) comprend au moins un moyen d'aspiration (41) à l'aide duquel les parties de bord (2, 3) et/ou les parties de bord auxiliaires (4, 5) peuvent être évacuées, plus particulièrement de manière active.

9. Dispositif de sectionnement (10) selon l'une des revendications précédentes,
**caractérisé en ce que**
une unité de capteur (50), plus particulièrement optique, est prévue, à l'aide de laquelle un écart entre la largeur de gaine réelle (1.1) et une largeur de gaine de consigne (1.2) du matériau plat (1) peut être détecté, dans lequel, plus particulièrement **en ce que** l'unité de sectionnement longitudinale (20) et/ou l'unité de sectionnement auxiliaire (30) est disposée en aval de l'unité de capteur (50) par rapport à une direction de transport (7) du matériau plat (1).

10. Dispositif de sectionnement (10) selon la revendication 9,
**caractérisé en ce que**
une unité de commande (60) est en liaison de communication avec l'unité de capteur (50) et une première unité d'entraînement (35) pour l'entraînement d'au moins un des moyens de sectionnement auxiliaires (31) et/ou une deuxième unité d'entraînement (23) pour l'entraînement d'au moins un des moyens de sectionnement longitudinaux (21), plus particulièrement de façon à ce qu'un passage de l'unité de sectionnement auxiliaire (30) de l'état de repos auxiliaire (I) à l'état de sectionnement auxiliaire (II) et/ou de l'unité de sectionnement longitudinale (20) de l'état de repos principal (A) à l'état de sectionnement principal (B) peut être effectué de manière automatique.

11. Dispositif de sectionnement (10) selon l'une des revendications précédentes,
**caractérisé en ce que**
l'unité de sectionnement auxiliaire (30) est conçue pour être amenée, de manière instantanée ou dans un délai de 30 secondes, de préférence dans un délai de 5 secondes, de l'état de repos auxiliaire (I) à l'état de sectionnement auxiliaire (II) et/ou **en ce qu'**une unité de sectionnement transversale (80) est prévue, qui est conçue pour sectionner le matériau plat (1) au moins à certains endroits, plus particulièrement perpendiculairement à une direction de transport (7) du matériau plat (1).

12. Dispositif de sectionnement (10) selon l'une des revendications précédentes,
**caractérisé en ce que**
un positionnement de l'unité de sectionnement auxiliaire (30) est couplé au moins partiellement à un positionnement de l'unité de sectionnement longitudinale (20).

13. Système (70) avec un dispositif de sectionnement (10) selon l'une des revendications précédentes, pour le sectionnement d'un matériau plat (1) en forme de gaine en au moins deux bandes plates (1.3, 1.4),
dans lequel, dans une direction de transport (7) du matériau plat (1) du dispositif de sectionnement (10), sont disposés, en aval, un premier dispositif d'enroulement (71) et un deuxième dispositif d'enroulement (72), de façon à ce que les dispositifs d'enroulement (71, 72) permettent d'enrouler chacun au moins une des bandes plates (1.3, 1.4) sur un rouleau d'enroulement (74), qui peut être monté sur un support d'enroulement (73) des dispositifs d'enroulement (71, 72),
plus particulièrement dans lequel une unité de logement (40) est prévue, à l'aide de laquelle les parties de bord (2, 3), de préférence qui peuvent être séparées, par le dispositif de sectionnement (10), d'une partie centrale (6) du matériau plat (1), peuvent être aspirées et/ou à l'aide de laquelle au moins une partie de bord auxiliaire (4, 5), qui peut être séparée, par le dispositif de sectionnement (10), d'une partie centrale (6) du matériau plat (1), peut être aspirée.

14. Procédé de sectionnement (100) pour le sectionnement d'un matériau plat (1) en forme de gaine, comprenant les étapes suivantes :
- sectionnement ou séparation d'une première et d'un deuxième partie de bord (2, 3) du matériau plat (1),
- passage d'une unité de sectionnement auxiliaire (30) d'un dispositif de sectionnement (10), plus particulièrement selon l'une des revendications 1 à 13, d'un état de repos auxiliaire (I) à un état de sectionnement auxiliaire (II),
- séparation d'au moins une partie de bord auxiliaire (4, 5), de préférence d'au moins deux parties de bord auxiliaires (4, 5), d'une partie centrale (6) du matériau plat (1) à l'aide de l'unité de sectionnement auxiliaire (30) dans l'état sectionnement auxiliaire (II).

15. Procédé de sectionnement (100) selon la revendication 14,
**caractérisé en ce que**
le procédé de sectionnement (100) comprend l'étape suivante :
- surveillance d'une largeur de gaine réelle (1.1) du matériau plat (1) et/ou surveillance d'un état de sectionnement d'une unité de sectionnement longitudinale (20) du dispositif de sectionnement (10),
dans lequel le passage de l'unité de sectionnement auxiliaire (30) de l'état de repos auxiliaire (I) à l'état de sectionnement auxiliaire (II) est effectué lorsque la largeur de gaine réelle (1.1) est inférieure à une largeur de gaine de consigne (1.2) et/ou le sectionnement des parties de bord (2, 3) du matériau plat (1) est interrompu.

16. Procédé de sectionnement (100) selon la revendication 14 ou 15, **caractérisé en ce que**
en outre l'étape suivante est prévue :
- déplacement des moyens de sectionnement auxiliaires (31) de l'unité de sectionnement auxiliaire (30) d'une première position de sectionnement (P) vers une deuxième position de sectionnement (Q), plus particulièrement transversalement à une direction de transport (7) du matériau plat (1), plus particulièrement dans lequel l'unité de sectionnement auxiliaire (30) est amené à l'état de repos auxiliaire (I) après que les moyens de sectionnement auxiliaires (31) ont atteint la deuxième position de sectionnement (Q).

17. Procédé de sectionnement (100) selon l'une des revendications 14 à 16,
**caractérisé en ce que**
les parties de bord (2, 3) et/ou les parties de bord auxiliaires (4, 5) sont évacuées séparément, plus particulièrement de manière active et/ou **en ce que** la surveillance d la largeur de gaine réelle (1.1) du matériau plat (1) comprend une analyse des signaux de capteur, plus particulièrement dans lequel la largeur de gaine réelle (1.1) est surveillée de manière optique.

18. Procédé de sectionnement (100) selon l'une des revendications 14 à 17,
**caractérisé en ce que**
le passage de l'unité de sectionnement auxiliaire (30) de l'état de repos auxiliaire (I) à l'état de sectionnement auxiliaire (II) a lieu de manière automatique et/ou
le matériau plat (1) est déplacé, au moins lors du sectionnement du matériau plat (1), plus particulièrement pendant tout le procédé de sectionnement (100), par rapport au dispositif de sectionnement (10) et/ou **en ce qu'**en outre l'étape suivante est prévue :
- sectionnement, au moins à certains endroits, du matériau plat (1), plus particulièrement perpendiculairement à une direction de transport (7) du matériau plat (1).
